Europäisches Patentamt

European Patent Office

Office européen des brevets

(19)

(11) **EP 1 450 155 A1**

(12) **EUROPEAN PATENT APPLICATION**
published in accordance with Art. 158(3) EPC

(43) Date of publication:
  **25.08.2004 Bulletin 2004/35**

(51) Int Cl.⁷: **G01N 25/18**

(21) Application number: **02803535.0**

(86) International application number:
  **PCT/JP2002/012076**

(22) Date of filing: **19.11.2002**

(87) International publication number:
  **WO 2003/044509 (30.05.2003 Gazette 2003/22)**

(84) Designated Contracting States:
  **AT BE BG CH CY CZ DE DK EE ES FI FR GB GR
  IE IT LI LU MC NL PT SE SK TR**
  Designated Extension States:
  **AL LT LV MK RO SI**

(30) Priority: **19.11.2001 JP 2001353755**

(71) Applicant: **The Circle for the Promotion of Science
  and Engineering
  Tokyo 152-8550 (JP)**

(72) Inventors:
  • **HASHIMOTO, Toshimasa
    Tokyo Institute of Technology
    Meguroku-ku, Tokyo 152-8550 (JP)**
  • **MORIKAWA, Junko
    Tokyo Institute of Technology
    Meguroku-ku, Tokyo 152-8550 (JP)**

(74) Representative: **Rapp, Bertram, Dr. et al
  Charrier Rapp & Liebau
  Patentanwälte
  Postfach 31 02 60
  86063 Augsburg (DE)**

(54) **METHOD FOR THERMAL ANALYSIS AND SYSTEM FOR THERMAL ANALYSIS**

(57)    A temperature change is applied to at least a portion of a sample to be measured while measuring the thermal characteristic of a minute portion of the sample based on the temperature change by using infrared ray. There are provided a method and an apparatus which enable the thermal analysis of a minute portion of the sample.

Fig.9

INFRARED RADIATION
THERMOMETER

DATA PROCESSOR

MICROSCOPE

SAMPLE

HOT STAGE

TEMP. CONTROLLER

**Description**

Technical Field

The present invention relates to a method and an apparatus for thermally analyzing a substance or material. More particularly, the present invention relates to a method and apparatus for thermally analyzing a minutely divided portion of such a sample.

Background Art

There has been increased a demand for the development of materials having a desired property in a minute region, in a wide range of technical fields relating to composite substances and materials such as polymers, biomaterials, semiconductor materials, ceramic materials, and metal materials; and further recent nanotechnology. Examples of these materials may include: thermoelectric elements, IC insulating films, heat-sensitive recording paper, heat-conducting paste, thin film insulating materials, tissue cryopreservation liquids and carbon fiber-reinforced composite materials. In order to develop the above-mentioned materials having a desired property in a minute region thereof, it is naturally necessary to precisely control their fine or minute structure. Moreover, in order to develop materials having such a fine structure, it is necessary to develop an analytical technique for precisely evaluating the characteristics of these materials.

Heretofore, as the method of evaluating the characteristic of a material on the basis of the analysis of the thermal behavior of the material, there have widely been used differential scanning calorimetry (DSC), differential thermal analysis (DTA), etc. These methods have a great advantage that they can detect the thermal characteristic in a sample to be measured with a high sensitivity.

However, due to the nature of the DSC or DTA, the analytical data based on the DSC or DTA are the average values which have been obtained on about several milligrams of a sample placed a DSC or DTA sample cell. Accordingly, it has been difficult for these methods to thermally analyze minute portions on the order of 1 mm with respect to the sample size.

Japanese Unexamined Patent Publication (JP-A; KOKAI) No. 3-189547 discloses a method of measuring the thermal property of a sample by using an infrared radiation thermometer. In this method, the thermal diffusivity of a film having a film thickness of 1 $\mu$m or less is measured by measuring the temperature in a non-contact manner. The thermal diffusivity of a thin film can be measured by this method. However, in this method, the physical property can only be measured in terms of the average value with respect to the area of the portion to be measured, and therefore this method is not different from the above-mentioned DSC or DTA in this viewpoint.

In the development of materials wherein the control of the fine structure is required, as in the field of nanotechnology as described above, the distribution of the thermal characteristic at a level on the micrometer order or smaller in a sample has a considerable effect on the characteristic of the material. Heretofore, there has been present a thermal analysis method of applying an AFM (i.e., a method of determining the distribution of heat conduction by in-plane scanning). However, there has not been present a method of carrying out thermal analysis two-dimensionally by using an infrared camera on a minute portion of a sample.

Disclosure of Invention

An object of the present invention is to solve the above-mentioned problem encountered in the prior art and to provide a method and an apparatus capable of thermally analyzing a minute or fine portion of a sample.

Another object of the present invention is to provide a method and an apparatus capable of simultaneously obtaining information on the coefficient of thermal conductivity and thermal diffusivity by thermally analyzing each minute portion of a sample by using an infrared camera while simultaneously two-dimensionally analyzing the behavior of temperature waves which have been applied in a manner similar to an alternating current.

As a result of earnest study, the present inventors have found that it is extremely effective in achieving the above-mentioned object to measure the thermal characteristic of a sample region to be measured, as thermal characteristic data (or a plurality or two-dimensional or pseudo-three-dimensional set or aggregation of thermal characteristic data) of each minute portion of 1 mm$^2$ or less (preferably 0.1 mm$^2$ or less, particularly 10 $\mu$m$^2$ or less) constituting the sample region, instead of measuring such thermal characteristic of the sample as an "average value" thereof.

The thermal analysis method according to the present invention is based on the above-mentioned discovery. More specifically, the thermal analysis method according to the present invention comprises: imparting a temperature change to at least a portion of a sample to be measured, so as to measure the thermal characteristic of a minute portion of the sample, which is present in the neighborhood of the heated portion (inclusive of the heated portion per se), based on the temperature change, by using an infrared sensor.

The present invention also provides a thermal analysis apparatus comprising at least: temperature changing means for applying a temperature change to a sample to be measured; infrared image enlarging means for enlarging a minute portion of the sample; and infrared measuring means for measuring the thermal characteristic of the minute portion; whereby the thermal characteristic of the minute portion of the sample is measured by using infrared ray based on a temperature change, while applying the temperature change to at least a portion of the sample.

In the thermal analysis method according to the present invention having the above-mentioned constitution, the thermal characteristic of a sample region to be measured, is measured as thermal characteristic data (or a plurality or two-dimensional set or aggregation of thermal characteristic data or "element") of each minute portion constituting the sample region, instead of measuring such thermal characteristic of the sample as an "average value" or "bulk" thereof (as in the thermal analysis of the prior art). As a result, the thermal characteristic can be measured more rapidly, and further, it becomes extremely easy to follow or trace the time-based change (or change with the elapse of time) in thermal characteristic data on the minute millisecond order or less in a specific region or minute portion on the micrometer order of a sample.

The following embodiments may be exemplified as some preferred embodiments of the present invention.

(1) While the temperature of a sample to be measured is increased or decreased at a constant rate, at least a portion of the sample is enlarged with a microscopic system, and the temperature distribution in the enlarged portion is measured by using an infrared radiation thermometer.

(2) While the temperatures of a sample to be measured and a reference sample are increased or decreased at a constant rate, at least a portion of the sample and at least a portion of the reference sample are enlarged with a microscopic system, and the temperature changes at this time are measured by using an infrared radiation thermometer, so that DTA analysis is performed by comparing the difference in the temperature change between the sample and reference sample for which the temperature and radiant quantity have been calibrated.

(3) While the temperature of a sample is increased or decreased at a constant rate, a modulated temperature wave is applied to at least a portion of the sample by using irradiation of light or Joule heat, and the temperature change at this time is measured by using an infrared radiation thermometer, so that the latent heat of the minute portion of the sample is observed based on the change in the resultant direct current portion so as to analyze the state of melting or solidification of the minute portion, and the thermal diffusivity is simultaneously measured based on the analysis of the resultant alternating current portion.

(4) An alternating current heat source is provided in a portion of a sample for the purpose of generating an alternating current-like temperature change therein. While the temperature of the sample is increased or decreased at a constant rate, at least a portion of the sample is enlarged with a microscope, and the resultant temperature change at this time is measured by using an infrared radiation thermometer and the phase delay of the alternating current-like temperature change of the minute portion of the sample is determined by using a separately provided temperature sensor, so that the thermal diffusivity of the minute portion of the sample is determined.

Brief Description of Drawings

Fig. 1 is a schematic perspective view of a sample for explaining the definition of the coefficient of thermal conductivity and so forth in the present invention.
Fig. 2 is a schematic perspective view of a sample for explaining non-steady heat conduction in the present invention.
Fig. 3 is a schematic graph (a) and a schematic phase difference graph (b) showing an example of temperature change measurement when an alternating current-like temperature change has been applied to a sample.
Fig. 4 is a schematic cross-sectional view for explaining the concepts of "thermally thick" and "thermally thin".
Fig. 5 is a drawing showing an example of the circuit diagram of a thin film temperature sensor.
Fig. 6 is a schematic drawing showing an example of a system usable in the method according to the present invention.
Fig. 7 is a schematic graph showing an example of an alternating current power supply voltage and measurement signal.
Fig. 8 is a schematic graph showing an example of phase delay (a) and amplitude (b).
Fig. 9 is a schematic perspective view showing an example of the arrangement of a microscope and so forth usable in the method according to the present invention.
Fig. 10 is a schematic plan view of a measurement region (a) of a sample and an example of the arrangement of an alternating current heat source (b) usable in the method according to the present invention.
Fig. 11 is a schematic plan view showing an example of a minute portion of a sample usable in the present invention.

Fig. 12 is a schematic plan view showing an example of the relationship between a sample region (a) and an enlarged portion (b) usable in the present invention.

Fig. 13 is a picture showing a time change in temperature distribution and temperature.

Fig. 14 is a picture showing a time change in temperature distribution and temperature.

Fig. 15 is a graph showing a time change in temperature distribution and temperature.

Fig. 16 is a graph showing a time change in temperature distribution and temperature.

Fig. 17 is a picture showing a time-based change in temperature distribution.

Fig. 18 is a picture showing a time-based change in temperature distribution.

Fig. 19 is a picture showing a time-based change in temperature distribution.

Fig. 20 is a picture showing a time-based change in temperature distribution.

Fig. 21 is a picture showing a time-based change in temperature distribution.

Fig. 22 is a picture showing a time-based change in temperature distribution.

Fig. 23 is a picture showing a time-based change in temperature distribution.

Fig. 24 is a picture showing a time-based change in temperature distribution.

Fig. 25 is a picture showing a time-based change in temperature distribution.

Fig. 26 is a picture showing a time-based change in temperature distribution.

Fig. 27 is a picture showing a time-based change in temperature distribution.

Fig. 28 is a picture showing a time-based change in temperature distribution.

Fig. 29 is a picture showing a planar temperature distribution in a cell.

Fig. 30 is a graph showing an intracellular temperature distribution as the changes in the direction of each axis.

Fig. 31 is a graph showing an intracellular temperature distribution as the changes in the direction of each axis.

Fig. 32 is a graph showing an intracellular temperature distribution as the changes in the direction of each axis.

Fig. 33 is a graph showing an intracellular temperature distribution as the changes in the direction of each axis.

Fig. 34 is a graph showing an intercellular temperature distribution.

Fig. 35 is a graph showing an intercellular temperature distribution.

Fig. 36 is a picture showing a change in the temperature distribution and emissivity intensity of a black body surface.

Fig. 37 is a picture showing a change in the temperature distribution and emissivity intensity of a black body surface.

Fig. 38 is a picture showing a change in the temperature distribution and emissivity intensity of a black body surface.

Fig. 39 is a picture showing a change in the temperature distribution and emissivity intensity of a black body surface.

Fig. 40 is a picture showing a temperature distribution in onion cells.

Fig. 41 is a picture showing the temperature distribution in onion cells.

Fig. 42 is a picture showing the temperature distribution in onion cells.

Fig. 43 is a picture showing the temperature distribution in onion cells.

Fig. 44 is a picture showing the temperature distribution in onion cells.

Fig. 45 is a picture showing the temperature distribution in onion cells.

Fig. 46 is a picture showing a measurement example of temperature diffusion anisotropy of polyethylene fibril.

Fig. 47 is a picture showing a measurement'example of temperature diffusion anisotropy of polyethylene fibril.

Fig. 48 is a picture showing a measurement example of temperature diffusion anisotropy of polyethylene fibril.

Fig. 49 is a picture showing a measurement example of temperature diffusion anisotropy of polyethylene fibril.

Fig. 50 is a picture showing a measurement example of temperature diffusion anisotropy of polyethylene fibril.

Fig. 51 is a picture showing a measurement example of temperature diffusion anisotropy of polyethylene fibril.

Fig. 52 is a picture showing a measurement example of temperature diffusion anisotropy of polyethylene fibril.

Fig. 53 is a picture showing a measurement example of thermal diffusion in a film planar direction.

Fig. 54 is a picture showing a measurement example of thermal diffusion in a film planar direction.

Fig. 55 is a picture showing a measurement example of thermal diffusion in a film planar direction.

Fig. 56 is a picture showing a measurement example of the cooling and crystallization processes of water droplet in air.

Fig. 57 is a picture showing a measurement example of the cooling and crystallization processes of water droplet in air.

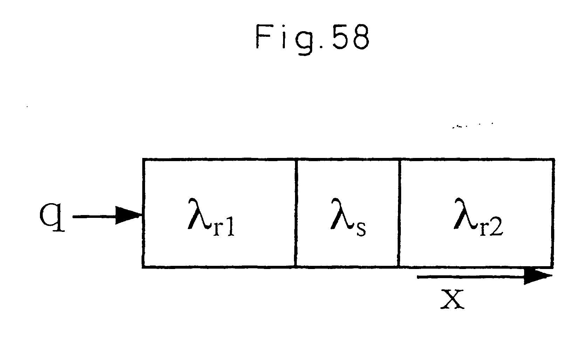

Fig. 58 is a schematic cross-sectional view of the constitution of a sandwich-like sample used in an example.

Fig. 59 is a graph showing the results of the temperature gradient observation of a sandwich-like sample.

Fig. 60 is a graph showing the results of the temperature gradient observation of a sandwich-like sample.

Fig. 61 is a graph three-dimensionally showing the temperature of a sample.

Fig. 62 is a graph three-dimensionally showing the temperature of a sample in the form of a differential image.

Fig. 63 is a graph three-dimensionally showing the temperature of a sample.

Fig. 64 is a graph three-dimensionally showing the temperature of a sample in the form of a differential image.

Best Mode for Carrying Out the Invention

Hereinbelow, the present invention will be described in detail with reference to the accompanying drawings as desired. In the following description, "%" and "part(s)" representing a quantitative proportion or ratio are those based on mass, unless otherwise specifically noted.

(Sample)

The sample is not particularly limited as long as the measurement of its thermal characteristic is useful. Examples of such samples may include: organic compounds, polymer compounds, organic coloring matters, minerals, glasses, ceramics, metals, water and aqueous solutions, plant cells,animal cells, etc.

Preferred samples to be measured in the present invention are not particularly limited, when an infrared camera is simply used. In the case of a contact-type temperature sensor is used in combination, sample may preferably be hardly electroconductive substances in the form of films, sheets or plates, or hardly electroconductive substances which are liquid or can be formed put into a liquid state. In addition, it is also possible to measure an electroconductive substance either by coating the electrode with an insulating thin film having a thickness such that it is negligible with respect to the thickness for the measurement, or by employing a method wherein the resultant value is corrected for the coating film portion. The following may be exemplified as examples of the substance to be measured.

(1) Polymer compounds such as phenol, urea, melamine, polyester, epoxy, polyurethane, cellulose, polystyrene, polypropylene, polyethylene, vinylidene chloride, polyamide, polyacetal, polycarbonate, polysulfone, ABS, polyphenylene oxide, polyether sulfone, polyarylate, acryl, acrylonitrile, polyacrylonitrile, polyether ethyl ketone, polyether ketone, polyimide and polyolefin.

(2) Organic compounds including organic coloring matters such as cyanine, phthalocyanine, naphthalocyanine, nickel complex, spiro compound, ferrocene, fulgide and imidazole, normal alkanes, alcohols such as ethanol, methanol and glycerin, and cyclic compounds such as benzene, toluene and benzoic acid.

(3) Bio-related compounds such as vascular endothelial cells, plant epidermal cells, algae, blood, organ tissue and wood.

(4) Metals

(5) Foods such as cheese, edible oil, tofu, jelly and meat.

(6) Liquid substance such as brine and other aqueous solutions, grease and lubricating oil

(7) Minerals such as silica, diamond, corundum, ruby, sapphire, agate, mica, halite, kaolin, granite, quartz, peridotite, gypsum, sulfur, barite, alunite, fluorite, feldspar, talc, asbestos, limestone, dolomite, cat's eye, jade and opal; and, fine ceramics such as quartz glass, fluoride glass, soda glass, soda lime glass, lead glass, aluminoborosilicate glass, borosilicate glass and aluminosilicate salt glass.

(8) Composite materials such as carbon fiber-reinforced plastic and talc-blended plastic.

(At Least A Portion)

The size of the region is not particularly limited, as long as the measurement of its thermal characteristic is useful (for example, by a measure such as the adjustment of the magnification factor of an infrared image to be input to an infrared sensor). While it is dependent on the size of the observation apparatus and/or measurement apparatus to be used therefor, the size of the region to be measured may generally be about 1000 μm × 1000 μm, and more preferably about 10 μm × 10 μm. If possible, the region may be all portions into which a sample to be measured has been divided.

In the present invention, a region (A) to be measured may be measured by dividing the region into a plurality of minute regions (B) as desired. In a case where a region to be measured is divided into a plurality of minute regions in this manner, the number of minute regions (B) within the single region (A) to be measured may preferably be four or more, and more preferably 1000 or more (and particularly preferably 10,000 or more). The number of minute regions (B) within the single region (A) to be measured is not particularly limited, as long as the thermal characteristic thereof can be measured. In general, the number may preferably be 64 × 64 or more, and more preferably 128 × 128 or more (and particularly preferably 256 × 256 or more).

In the present invention, a time-based change (or change with the elapse of time) in a region to be measured may be followed or traced as desired. In a case where a time-based change is followed in this manner, the time corresponding to a single measurement may preferably be 0.5 second or less, more preferably 0.05 second or less, and particularly preferably 1 millisecond or less.

In the present invention, a difference or ratio in a time-based change of thermal characteristic of a single or plurality of minute portions may be determined among a plurality of minute portions for which thermal characteristic have been measured. The thermal characteristic of the minute portion can typically be represented continuously as the difference between a time-based change in temperature and the same data which has been acquired immediately before the measurement of the time-based change in temperature, and/or the sensitivity can be enhanced as desired by providing a picture by emphasizing only the changed portions. A "differential image" technique may be used independently or in combination with the above techniques.

(Temperature Change)

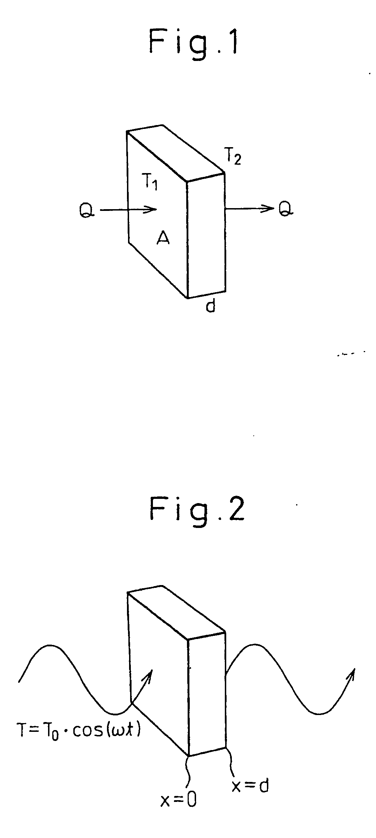

In the present invention, the temperature change to be applied to at least a portion of a sample to be measured is not particularly limited. That is, a uniform or time-based change can be applied to at least a portion of the sample. In addition, a temperature change may be applied to one or more minute portions constituting the sample uniformly, or separately for each minute portion and/or as a time-based change as desired. For example, the temperature change of a minute portion may preferably be a rise or fall in temperature at a constant rate or an isothermal temperature change (Fig. 1). In addition to the temperature rise or fall at a constant rate, an alternating current change may be applied simultaneously as desired. In addition, an alternating current change may be applied independently. The alternating current may preferably be a sine wave, but a chopping wave, square wave or other arbitrary waveform can also be applied so that the results can be analyzed by Fourier transformation.
Examples of the temperature change may include the following changes.

(1) The temperature of a sample is changed at the same rate by raising or lowering the temperature of a stand or mount for the sample at a constant rate.
(2) A point heat source is provided by providing a laser beam or radiating converged light onto a portion of a sample, independently from the above change (1).
(3) An alternating current point heat source is provided by using the point heat source of the above (2) in combination with a chopper so as to provide intermittent light.
(4) A sinusoidal or stepped temperature wave is provided by placing a metal wire, ribbon or a metal thin film and so forth which has been printed on glass plate, in contact with a portion of a sample surface and applying an alternating current thereto.

Further, a temperature change having a plurality of regularities can also be applied to a sample by appropriately combining two or more of the above changes (1) through (4). Examples thereof may include a method wherein an electric current is applied to a sample while cooling the sample.

(Thermal Characteristic)

Examples of thermal characteristic which is usable in the present invention may include one or more characteristics selected from the group consisting of: temperature, temperature change, temperature distribution, latent heat, melting or solidification state, phase delay of a change, thermal diffusivity, coefficient of thermal conductivity, volumetric specific heat; and a time-based change in these thermal characteristics; frequency dependency in a case where an alternating-current temperature wave is used, or a difference or ratio of these thermal characteristics among a plurality of minute portions. Two or more of these thermal characteristics may be measured in combination as desired.

(Measurement Using Infrared Ray)

The infrared ray which is preferably usable in the present invention is not particularly limited. The infrared ray may preferably be electromagnetic ray having a wavelength range of 3-5 μm, more preferably a range of 0.9-12 μm. The infrared ray may also be laser light which has been emitted from a semiconductor device and so forth as desired.

(Infrared Sensor)

The infrared sensor and/or infrared measuring means which is usable in the present invention is not particularly limited. A non-contact type measuring means (e.g., infrared radiation thermometer) may preferably be used, since it may obstruct the measurement of the thermal characteristic in a minute portion of a sample, as slightly as possible.
The infrared detector to be used in infrared measuring means of this type is not particularly limited, as long as it can detect the infrared ray of interest. It is preferred to use an apparatus having a device such as a CCD. The number of pixels in such a device may preferably be at least $64 \times 64$ pixels and more preferably at least $128 \times 128$ (and particularly preferably at least $256 \times 256$) pixels.

(Infrared Image Enlarging Means)

In the present invention, the "infrared image enlarging means" and/or "microscopic system" is not particularly limited, as long as it enables the observation of a minute portion by using infrared ray on a minute portion of a sample to be measured (or it can form an enlarged image with infrared ray). The "infrared image enlarging means" is not necessarily required to have an optical element in the form of a lens and/or mirror.

The magnification of the microscope may preferably be 5 times or more, more preferably 10 times or more, and particularly preferably 40 times or more.

(Temperature Controller/Data Processing Means)

The temperature controller and/or data processing means which is usable in the present invention is not particularly limited. These controller and/or data processing means may preferably be controlled and/or the resulting data may preferably be processed by a computer such as a personal computer as desired.

The data processing method which is usable in the present invention is not particularly limited. In addition to the processing in the form of ordinary analog data or digital data, the measurement data can also be processed in the form of vector quantity and so forth. Further, the infrared measurement data may also be combined with other arbitrary data. This data may be processed so as to provide two-dimensional data, or this two-dimensional data may be processed so as to provide pseudo three-dimensional data by integrating cross-sectional images as in the case manner of NMR (or MRI), X-ray CT, etc.

(Measurement Principle and Measurement Apparatus)

Hereinbelow, there will be described in detailed the measurement principle and an apparatus for the measurement which is preferably usable in the present invention.

(Definition of Coefficient of Thermal Conductivity and Thermal diffusivity)

In a plate-shaped sample having a surface area "A" and a plate thickness d as shown in Fig. 1, when the sample is in a steady state in which one side of the sample shows a temperature $T_1$ and the opposite side of the sample shows a temperature $T_2$ ($T_1 > T_2$). In this case, when a quantity of heat Q flows within the sample in the direction of plate thickness only by one-dimensional conduction of heat, this quantity of heat Q is represented by the following formula.

$$Q = \lambda \cdot (T_1 - T_2) \cdot \frac{A}{d} = \lambda \cdot A \cdot \frac{\Delta T}{d} \tag{1}$$

The proportional constant $\lambda$ in this formula is defined as the coefficient of thermal conductivity.

In a case where the concentration within the sample is not constant, the relationship between the temperature distribution within the sample and a time-based change in the temperature is represented by the thermal diffusion equation indicated below, when the temperature of the sample is denoted by "p" and the constant pressure specific heat is denoted by "Cp".

$$\rho \cdot C_p \cdot \frac{\partial T}{\partial t} = \lambda \cdot \left( \frac{\partial^2 T}{\partial x^2} + \frac{\partial^2 T}{\partial y^2} + \frac{\partial^2 T}{\partial z^2} \right)$$

$$\tag{2}$$

$$\frac{\partial T}{\partial t} = \alpha \cdot \left( \frac{\partial^2 T}{\partial x^2} + \frac{\partial^2 T}{\partial y^2} + \frac{\partial^2 T}{\partial z^2} \right)$$

The proportional constant $\alpha$ at this time is defined as the thermal diffusivity.

The thermal diffusivity $\alpha$ and the coefficient of thermal conductivity $\lambda$ have a relationship represented by the following formula.

$$\lambda = \alpha \cdot C_p \cdot \rho \tag{3}$$

(Measurement Theory During Alternating Current-Like Thermal Change)

There is described a measurement theory when an alternating current-like thermal change is applied to a sample.

That is, when a non-steady state thermal conductivity of a sample in a single dimension only in the direction of thickness (direction of the x-axis) is considered, the above-mentioned thermal diffusion equation (2) is converted into the following formula.

$$\frac{\partial T}{\partial t} = \alpha \cdot \frac{\partial^2 T}{\partial x_2} \tag{4}$$

The above-mentioned formula (4) is resolved under the following conditions as shown in Fig. 2.

(i) The temperature change on one surface of a sample to be measured shows a change in the manner of an alternating current.

$$X = 0, T = T_0 \cdot \cos(\omega t)$$

(ii) The temperature wave infinitely diffuses.
(iii) The sample to be measured is thermally thick as shown in the following formula.

$$d > \sqrt{\frac{2\alpha}{\omega}}$$

At this time, the solution is represented by the following formula.

$$T(x,t) = T_0 \cdot \exp\left(-\sqrt{\frac{\omega}{2\cdot\alpha}}\cdot x\right)\cdot\cos\left(\omega\cdot t - \sqrt{\frac{\omega}{2\cdot\alpha}}\cdot x\right) \tag{5}$$

Here, $\omega$ is the angular velocity of the modulation frequency, and when the modulation frequency is denoted by f, then $\omega = 2\cdot\pi\cdot f$. In the formula (5), the term for exp is the temperature amplitude at distance x, while the term for cos is the phase at x. Accordingly, the time-based change in the temperature at a thickness d of a sample is represented by the following formula.

$$T(d,t) = T_0 \cdot \exp\left(-\sqrt{\frac{\omega}{2\cdot\alpha}}\cdot d\right)\cdot\cos\left(\omega\cdot t - \sqrt{\frac{\omega}{2\cdot\alpha}}\cdot d\right) \tag{6}$$

Here, when only the phase difference of temperature is noted, since the phase difference $\Delta\theta$ is the difference in the phase between the face where $\times = 0$ and the face where $\times = d$, the phase difference $\Delta\theta$ is represented by the following formula.

$$\Delta\theta = -\sqrt{\frac{\omega}{2\cdot\alpha}}\cdot d + \frac{\pi}{4} \tag{7}$$

In addition, since $\omega = 2 \cdot \pi f$, the phase difference is represented by the following formula.

$$\Delta\theta = \sqrt{\frac{\pi \cdot f}{\alpha}} \cdot d + \frac{\pi}{4} \tag{8}$$

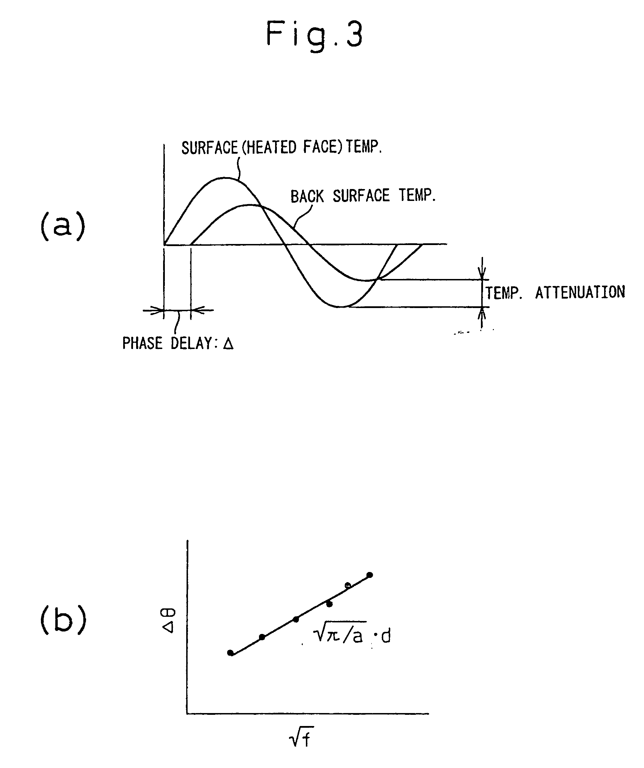

A schematic view of such data is shown in Figs. 3(a) and 3(b).

According to the above-mentioned formula (8), the thermal diffusivity $\alpha$ can be determined by heating one side of a sample having a known thickness d is heated in an alternating current-like manner by changing the modulation frequency f, and then measuring the phase delay $\Delta\theta$ of the temperature change on the other side in this case. In this manner, in the measurement wherein a temperature change in the form of an alternating current is applied to a sample, since the thermal diffusivity is determined from the phase difference of the temperature change between the heated side and the opposite side of the sample, the error attributable to the absolute value of the temperature hardly becomes problematic, to thereby enable a highly precise measurement.

(Thermal Diffusion Length)

Since the term:

$$\sqrt{2 \cdot \alpha / \omega}$$

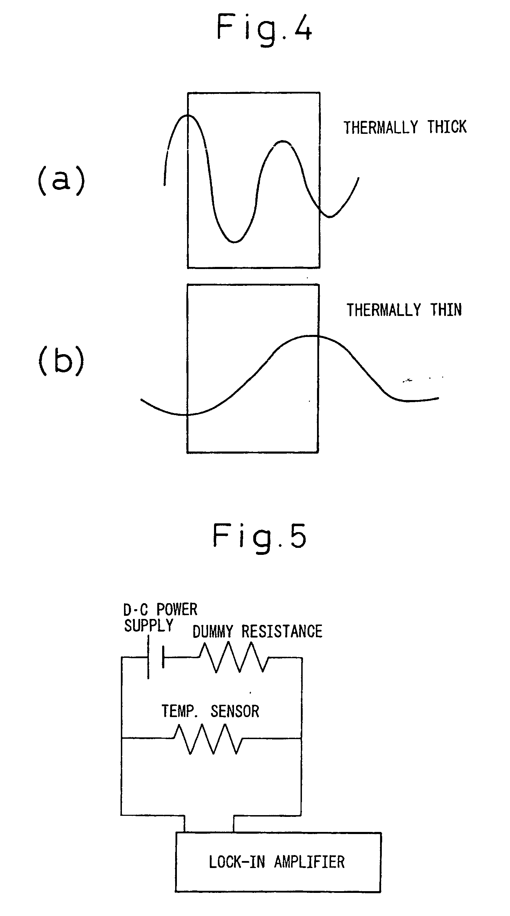

has a dimension of length under the above-mentioned "thermally thick" condition, it is referred to as thermal diffusion length, and is an important parameter in the present measurement method. The relationship between the sample thickness d and the thermal diffusion length $\mu$ is defined below as shown in Figs. 4(a) and 4(b).

d > $\mu$: Thermally thick

d < $\mu$: Thermally thin

Since the thermal diffusion length constitutes the wavelength of a temperature change, when the thermal diffusion length is larger than the thickness of a sample (that is, when a "thermally thin" condition is satisfied), the entire sample causes a temperature fluctuation at the same period. In this case, the phase difference of temperature fluctuation between the surface and the back surface of the sample approaches zero, and the thermal diffusivity can no longer be determined from formula (8). Accordingly, the "thermally thick" condition (which is required for the validity of the formula (8)) means that a temperature wave of at least one wavelength is necessarily present within the sample.

(Method of Heating Sample Surface)

There is described a preferred embodiment for providing a heat source on a sample surface in the present invention.

In such an embodiment, it is preferred that a metal thin film is provided on the sample by sputtering a metal such as gold (Au) and the resultant metal film is as an alternating current heater. In this alternating current heater, a modulated alternating current is applied by, for example, a function synthesizer, and an alternating current-like temperature wave is generated in the sample by the Joule heat at that time. Since the Joule heat reaches a maximum at its peak value regardless of the sign (i.e., plus and minus) of the current, the period of the temperature change at this time becomes double the alternating current period as shown in the formula (11).

$$V = V_0 \cdot \cos(\omega \cdot t) : I = I_0 \cdot \cos(\omega \cdot t) \tag{9}$$

$$P = I^2 \cdot R$$
$$= I_0^2 \cdot R \cdot \cos^2(\omega \cdot t)$$
$$= \left(I_0^2 \cdot R/2\right) \cdot \left(1 + \cos(2 \cdot \omega \cdot t)\right) \qquad (10)$$

Here, V denotes the voltage, "I" denotes the current and P denotes the calorific value. Accordingly, the period of actual heating becomes double the applied modulation frequency. According to this method, since the calorific value of the alternating current heater is small enough for the calorific value to be negligible as compared with that of the sample, and the alternating current heater is formed by direct sputtering onto the sample, the heat loss between the heater and the sample is substantially negligible.

(Method of Measuring Temperature Change on Back Surface of Sample)

In a preferred embodiment of the present invention, a metal thin film is formed on the back surface of a sample (opposite side from the surface having an alternating current heater) by sputtering a metal such as gold (Au) in the same manner as the heater, and the resultant metal thin film may preferably be used as a thin-film temperature sensor. Fig. 5 shows a schematic view of a circuit diagram of a thin film sensor. When the temperature is changed on the temperature sensor side of the sample, the resistance value of the metal thin film is also changed in proportion to the temperature due to its temperature dependency. A direct current power source and a dummy resistor are incorporated in the circuit of the thin film temperature sensor, and the alternating current component of the change in the resistance of the metal thin film is measured as a change in the voltage by using a lock-in amplifier incorporated in parallel with the temperature sensor. The temperature dependency of the resistance value of the temperature sensor may vary depending on the sputtering conditions and so forth. However, since the thermal diffusivity is determined according to a phase difference and not an absolute value of the temperature, this variation does not substantially become problematic. According to this method, since the thermal capacity of the temperature sensor is small enough to be negligible in comparison with that of the sample, and the sputtering is performed directly on the sample, the heat loss between the sensor and the sample is negligible.

(Basic System Constitution)

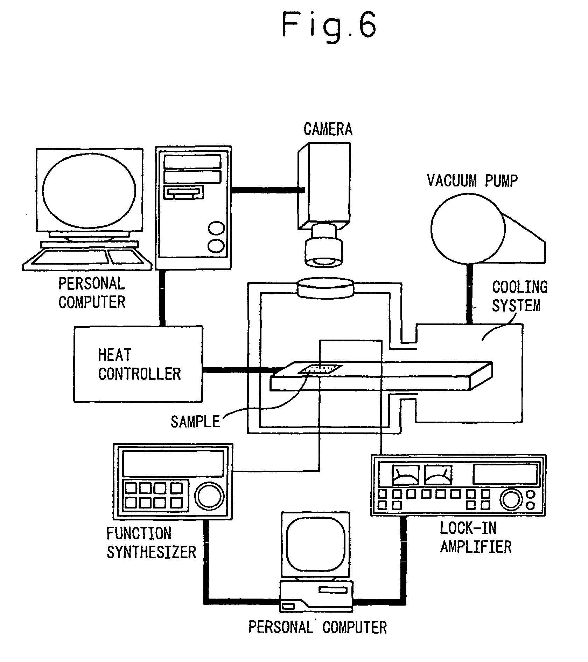

An example of the basic system constitution to be preferably used in the measurement method according to the present invention (measurement apparatus according to the present invention) is shown in the schematic view of Fig. 6.

This system comprises: a function synthesizer for heating a sample with alternating current, a DC power source for converting a temperature change of the surface of the sample into an electrical current, a lock-in amplifier for selectively measuring a specific frequency of a temperature change on the back side of the sample, a hot stage and a temperature controller for heating/cooling the sample, a sample cell for housing the sample in the hot stage, a digital multimeter for checking the DC power source flowing into a thin film temperature sensor, and a personal computer for controlling each apparatus and for processing the data.

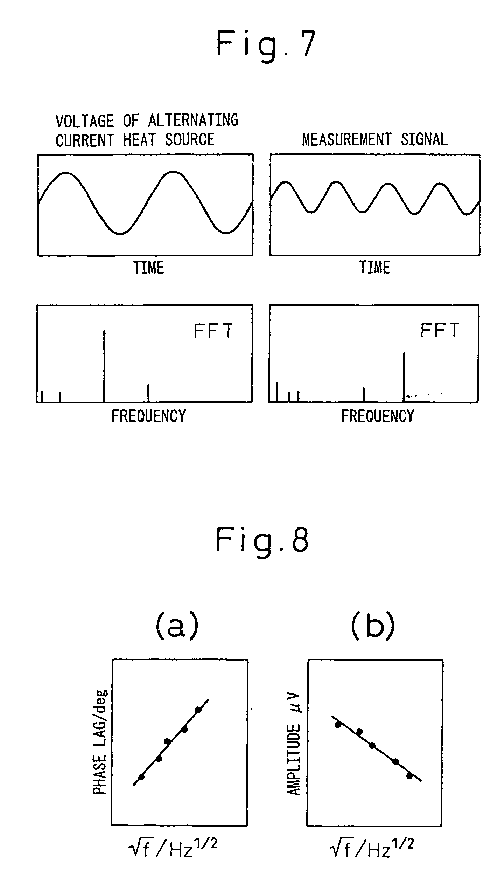

Measurement examples which have been obtained by using the system constitution shown in Fig. 6 are schematically shown in the graphs of Figs. 7 and 8.

(Embodiment of Sample Arrangement, etc)

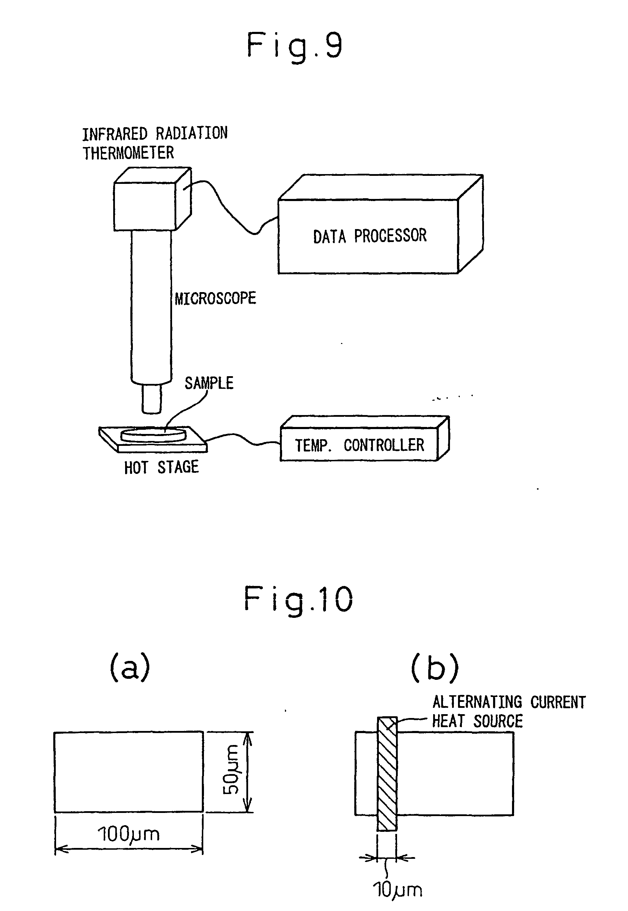

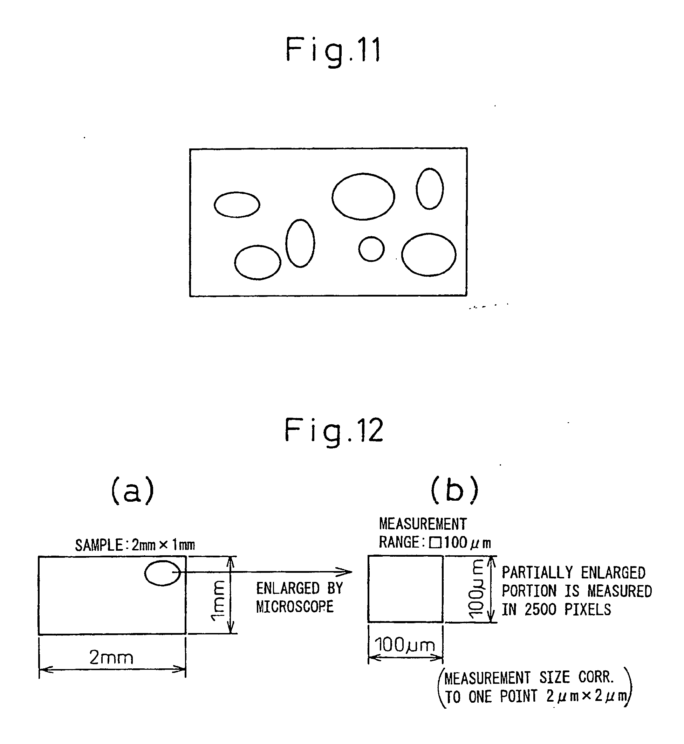

An example of the arrangement of the sample and infrared image enlarging means (microscope, etc.) which can be preferably used in the present invention is schematically shown in the perspective view of Fig. 9. In this example of Fig. 9, a sample schematically shown, for example, in Fig. 10 (a) can be measured in a measurement region such as one schematically shown in Fig. 11 (Fig. 10(b) schematically shows an example of the provision of the above-mentioned alternating current heat source in such a sample). In addition, Figs. 12(a) and 12(b) show an example of the embodiment for sample enlargement.

An example of the relationship between the sample region and the enlarged portion is shown in Figs. 12(a) and 12(b). In a case where the enlarged portion shown in Fig. 12(b) is measured at 2500 pixels, the measurement size of a single point is 7.5 μm × 7.5 μm.

(Example of Measuring Conditions)

Examples of conditions which can be preferably used in the system constitution of Fig. 6 may be exemplified as follows.

(i) Sample size: $\Box$ 7.5 μm to 20 mm
(ii) Sample thickness: 0.1 μm to 3 mm
(iii) Measuring temperature range: 20°C to 350°C
    (according to a special specification: -269°C to 600°C)
(iv) Temperature rise/fall rate: 0.1°C/min to 20°C/min
    (0.01°C/min to 2000°C/min)
(v) Measuring frequency range: 0.01 Hz to 10 MHz
(vi) Temperature change of sample due to alternating current
    heating: 0.1°C to 10°C

(Other Measuring Conditions)

(1) The following conditions are exemplified as examples of conditions which can be preferably used in the present invention in an embodiment wherein a temperature distribution of an enlarged portion is measured by using an infrared radiation thermometer by magnifying at least a portion of a sample with a microscope while raising or lowering the temperature of a sample to be measured at a constant rate.

(i) Sample size: $\Box$ 7.5 μm to 20 mm
(ii) Sample thickness: 1 μm to 3 mm
(iii) Magnification: 1 to 100 times
(iv) Measuring range: $\Box$ 7.5 μm to $\Box$ 1 mm
(v) Infrared radiation thermometer sampling interval: 1
    frame/second to 5500 frames/second
    (The slower sampling rate is not particularly limited.)
(vi) Infrared radiation thermometer resolution: 100 pixels to
    50000 pixels/square millimeter
(vii) Temperature rise/fall rate: 0.05°C/min to 2000°C/min

(2) The following conditions are exemplified as examples of conditions which can be preferably used in the present invention in an embodiment wherein DTA analysis is carried out on a sample by magnifying at least a portion of a sample and a reference sample with a microscope, while raising or lowering the temperature of a sample to be measured and a reference sample at a constant rate, the temperature change at that time is measured with an infrared radiation thermometer, and the difference in the temperature change of the measurement sample and the reference sample is compared.

(i) Calibration sample: Sapphire, boron nitride, vitreous carbon.

(3) An embodiment wherein a thermal diffusivity is measured from a delay in the phase difference of a temperature wave that has arrived at a location at a distance "d" away by heating a portion of a sample to be measured in the manner of an alternating current while carrying out the thermal analysis (2).

(i) Contact-type alternating current heat source formation
    method: Attaching a metal resistor, thermocouple, or thermostat by sputtering, vapor deposition or adhesion and so forth.
(ii) Type of contact-type alternating current heat source:
    Gold, platinum, silver, Ni, Al, Cr, Ni, C, Ti and so forth.

(Electroconductive Substance)

The electroconductive substance which can be preferably used for the alternating current heat source is not particularly limited, as long as it can generate Joule heat as a result of current flowing therethrough. Examples of such electroconductive substance may include: gold, silver, platinum, copper, iron, zinc, antimony, yttrium, chromel, constantan, nichrome, aluminum, chromium, nickel and carbon.

In addition, the thickness of the electroconductive thin film used in the alternating current heat source and resistance thermometer may preferably be adequately thin as compared with the measured sample to the extent that its interface with the measured sample is negligible, its thermal capacity may preferably be adequately small as compared with the measured sample, and it may preferably be completely adhered to the measured sample. In such a case, one side itself of the measured sample is presumed to generate heat by alternating current at the modulation frequency of the alternating current heat source (Japanese Patent No. 2591570, for example, can be referred to for detailed information on the arrangement and utilization of such an alternating current heat source).

(Non-Contact Type Alternating Current Heat Source)

In the present invention, a method based on the radiation and absorption can be used to apply an alternating-current temperature wave to a portion of the sample. In this case, a method can be used in which, for example, laser radiation, converged visible light or infrared light is applied to the sample either directly or after modulating with an optical chopper.

Hereinbelow, the present invention will be described in more detail with reference to Examples.

Examples

Example 1

(Example of determining the coefficient of thermal diffusion in the direction of thickness of a film from measurement of phase delay when a temperature wave is diffused in the direction of thickness of a film)

Experimental Method: A ribbon-shaped, flat heater electrode (1 mm $\times$ 5 mm, thickness: 50 nm, resistance of flat electrode: 50 ohms) was formed by sputtering on Pyrex glass (thickness: 0.5 mm, mfd. by Corning Inc., trade name: Pyrex 7740) measuring about 2 cm $\times$ 3 cm. The metal sputtering conditions used at this time were as indicated below.

<Metal Sputtering Conditions>

Sanyu Electronics, 5 mA, 2 kV, 5 minutes

A temperature wave was generated by applying an alternating current having a frequency of 0.5 Hz to the flat heater electrode obtained in the manner described above. The alternating current voltage input at this time was 3 Vp-p, the resistance of the flat electrode was 48 ohms, and the waveform was a sine wave.

Sample: A commercially available food wrapping film (polyvinylidene chloride, thickness: 8 $\mu$m, Kureha Chemical Industry, trade name: Krewrap) and a commercially available heat transfer ink ribbon (film thickness: 6 $\mu$m, ink layer thickness: approx. 0.5 $\mu$m, trade name: ALPS MD Ink Ribbon) were arranged on the above-mentioned electrode so that the food wrapping film and ink ribbon were layered in alternating layers. Two samples arranged in this manner were simultaneously measured with an infrared camera (Raytheon, trade name: Radiance). The shutter speed of the infrared camera was set to 1 ms, the number of frames per second to 200, and the number of pixels to 128 $\times$ 128 pixels.

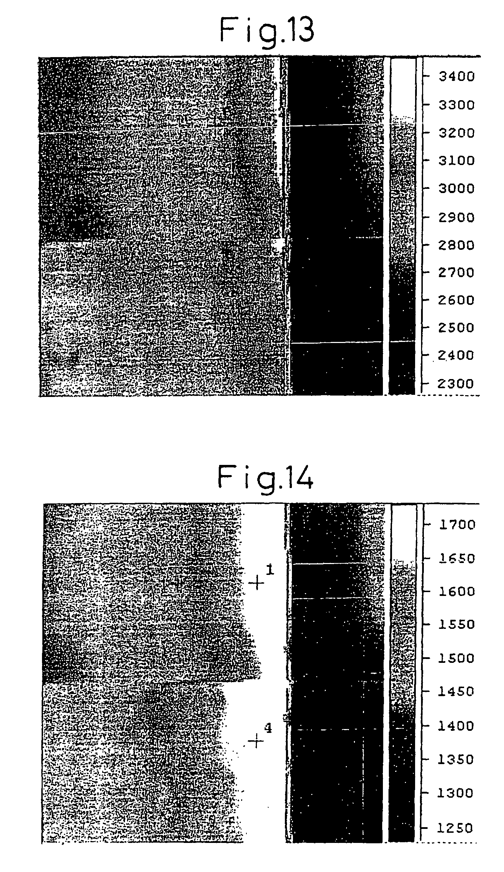

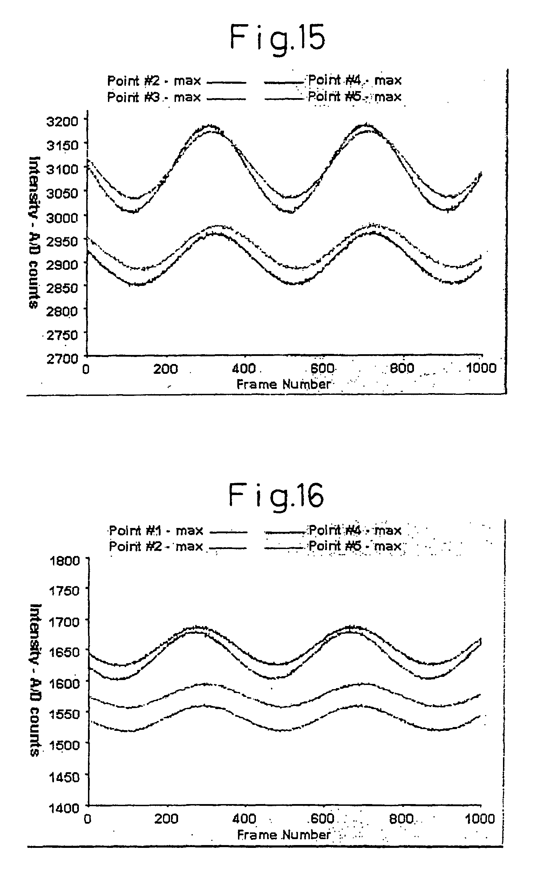

Results: The temperature distributions of the food wrapping film and ink ribbon are shown in Figs. 13 and 14 (in the figures, the metal of the electrode is shown on the left, the wrapping film is shown in the upper left corner, and the ink ribbon is shown in the lower left corner).

Figs. 15 and 16 show a time-based change in temperature at each point in the photographs. The phase difference was delayed at a point located away from the electrode side of the sample (at a distance of 100 $\mu$m), and based on the relationship between phase and thermal diffusivity from the thermal diffusion equation, the calculated thermal diffusivity of the ink ribbon was 0.11 m$^2$s$^{-1}$. The thermal diffusivity of the wrapping film was 0.09 mm$^2$s$^{-1}$. The difference in the coefficients of thermal diffusion of these two sheets can also be confirmed from surface information. In addition, although the difference between Figs. 13 and 14 was due to different observation times, the calculated coefficients of thermal diffusion were the same as the above-mentioned values.

Example 2

(Analysis of cooling process of plant endothelial cells-Analysis of intercellular and intracellular crystallization rate and analysis of temperature propagation)

Experimental Method: The cooling process of onion endothelial cells adhered to a slide glass was measured on a sample stage provided with a Peltier element on a cooling plate placed on ice by using an infrared camera similar to that used in Example 1. During the cooling process, the cells were cooled at a cooling rate of about 200°C/min over the range from room temperature to the vicinity of -30°C. The shutter speed of the infrared camera was set to 2 ms, the number of frames was set to 200 frames/second and the number of pixels was set to $128 \times 128$ pixels.

Sample: The first or second layer of the bud and the exodermis at a location nearly in the center from the location of the root were sampled from the outside of a fresh onion and adhered to a slide glass for use as the sample. The thickness of the exodermis was about 75 μm, and a single cell was oval in shape and had a size of about 100 μm $\times$ 300 μm.

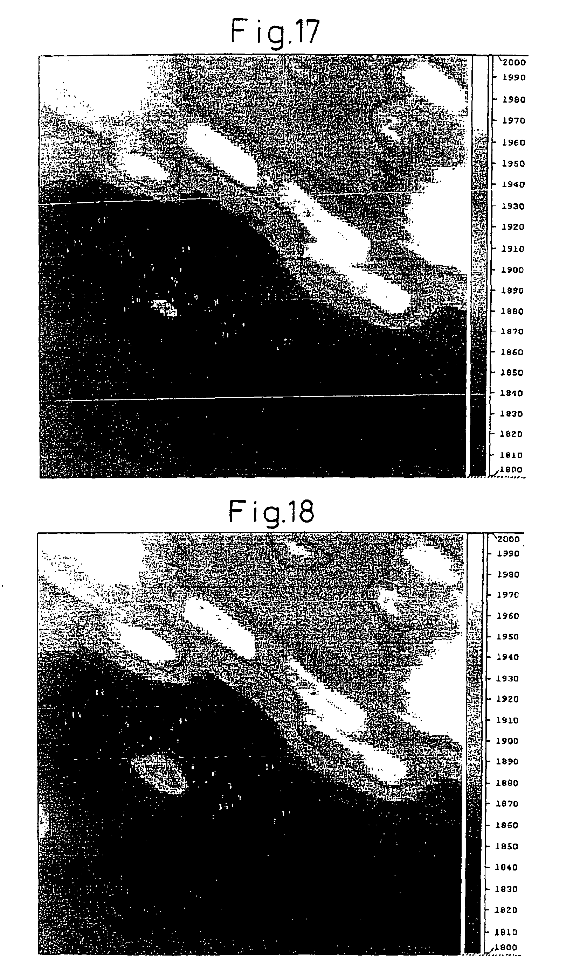

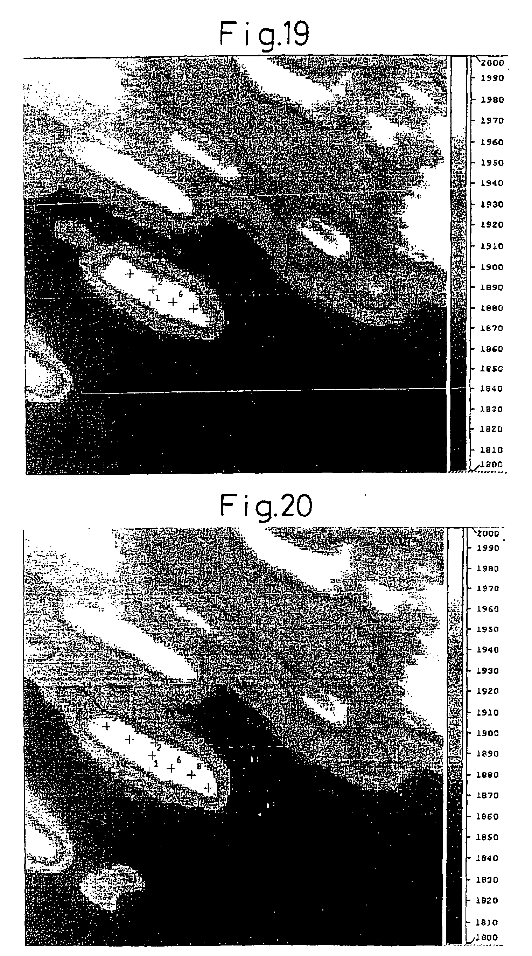

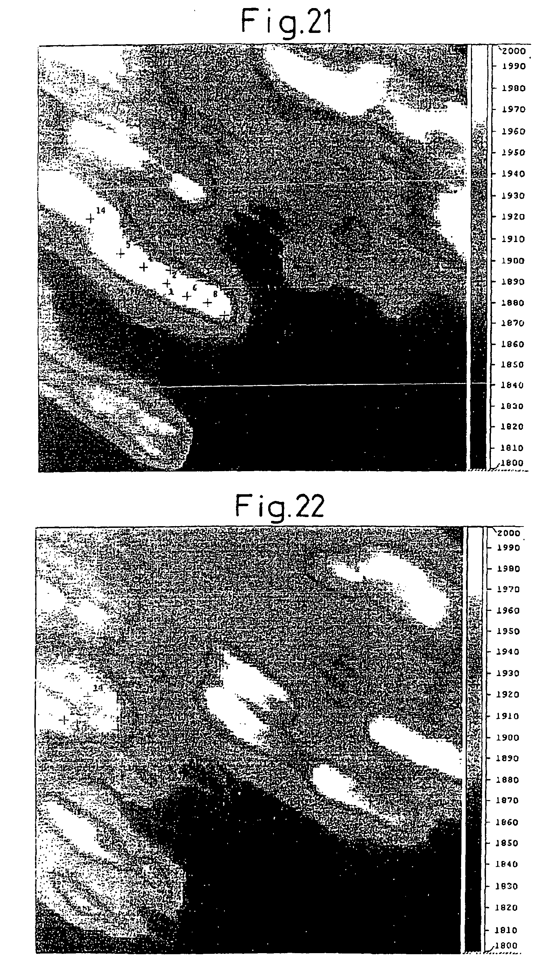

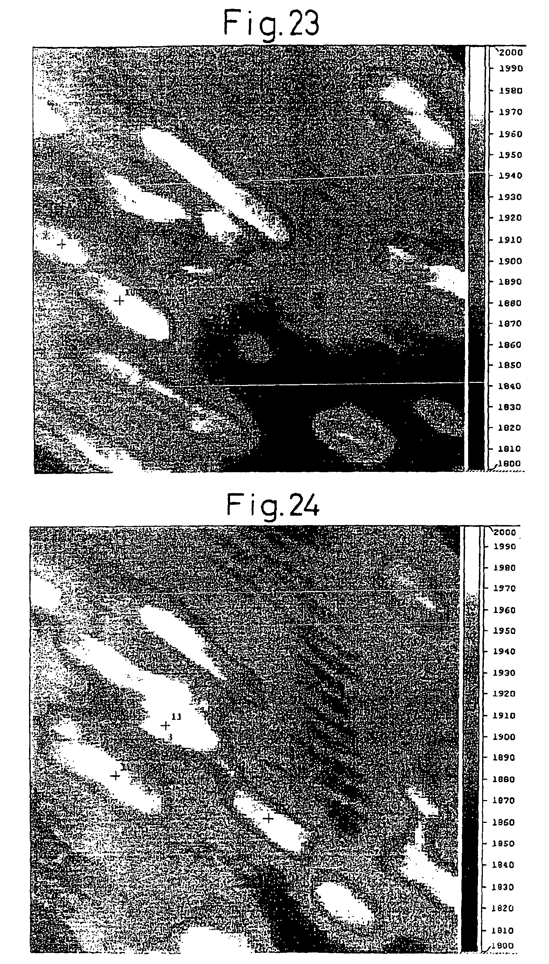

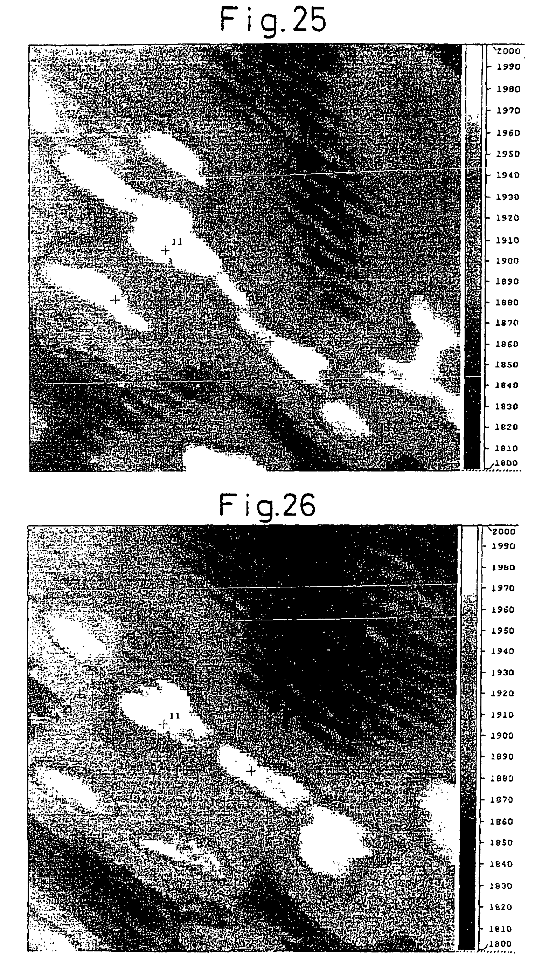

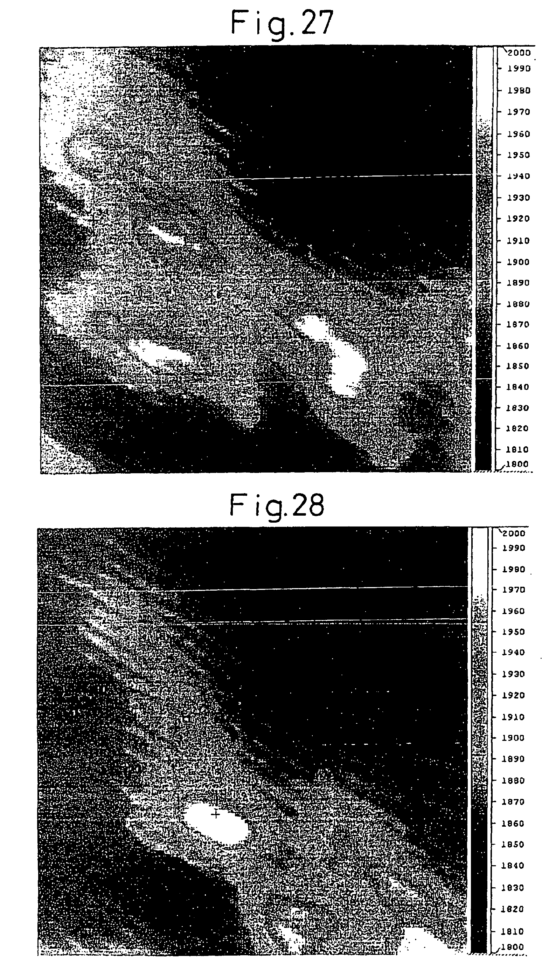

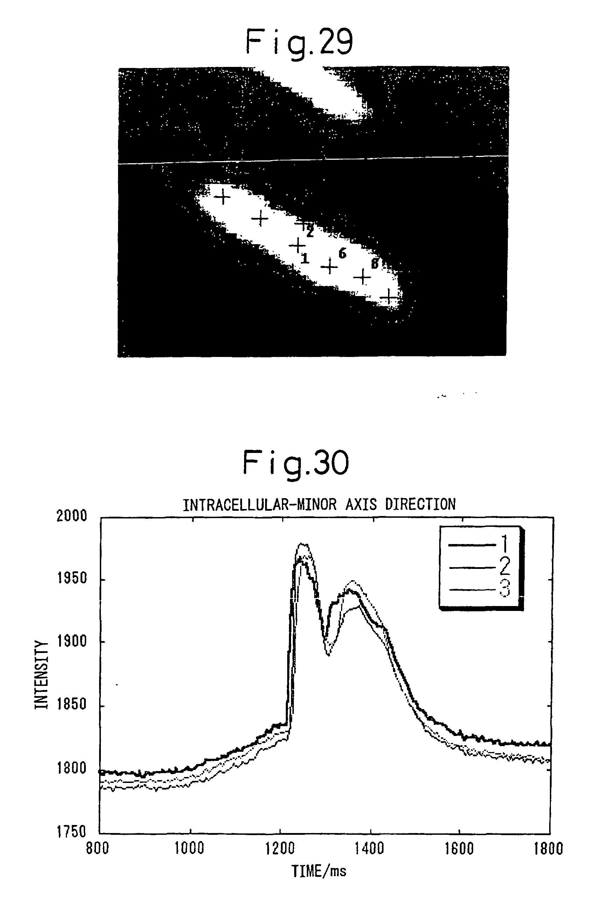

Results: The cooling process of the onion cells is shown in the form of a time series in Figs. 17 through 28. When freezing an aqueous solution, and not just onions, typically supercooling occurs after which the temperature temporarily rises due to latent heat once crystallization begins. In these figures, the bright locations indicate those portions where freezing is occurring, and the temperature is higher than the ambient temperature. Once freezing is completed, the temperature becomes the same as the ambient temperature, and those portions in the figures become dark. Temperature change were measured at specified locations both within and between the cells. Fig. 29 is an enlarged image of Fig. 20.

Intracellular (in the directions of the minor and major axes) and intercellular temperature profiles are shown in Figs. 30 through 33 for the locations represented by an "+" in Fig. 29.

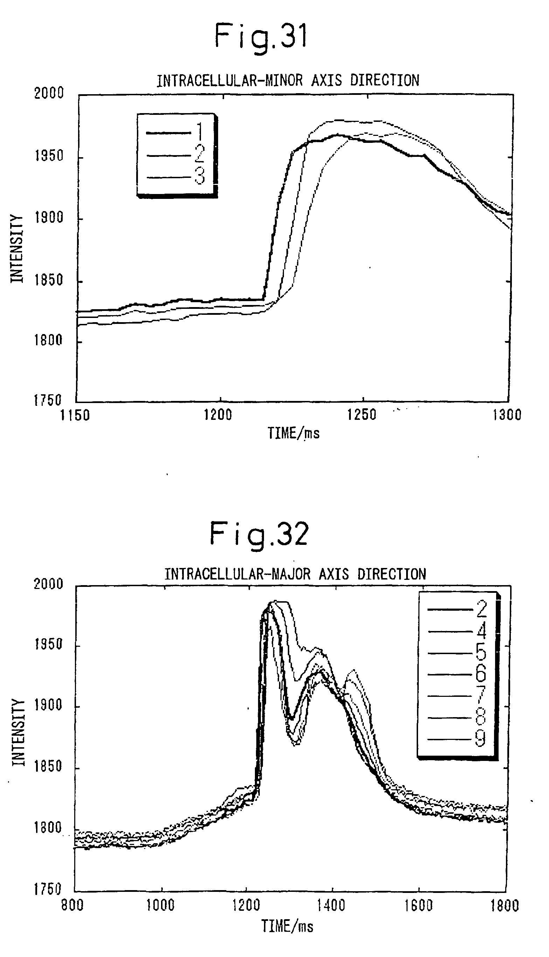

Figs. 30 and 31 show a comparison of the temperature change for selected points in the direction of the minor axis within the cells. (Fig. 30 depicts an example portraying the phenomenon of the generation of heat due to solidification within the cells, while Fig. 31 is an enlarged view of the portion where the intensity rises). It was found that, as the distance from the starting point (1) of the latent heat generation became larger, the rise time for the latent heat generation and the time corresponding to the initial maximum value caused a delay of several tens of milliseconds. The temperature propagation rate in the direction of the minor axis within the cells was estimated to be roughly 5 μm/ ms on the basis of this. This the growth rate of ice. In addition, the profile of latent heat exhibits a peak that is different from the main peak, and a time delay roughly equal to that of the main peak is demonstrated by this peak as well.

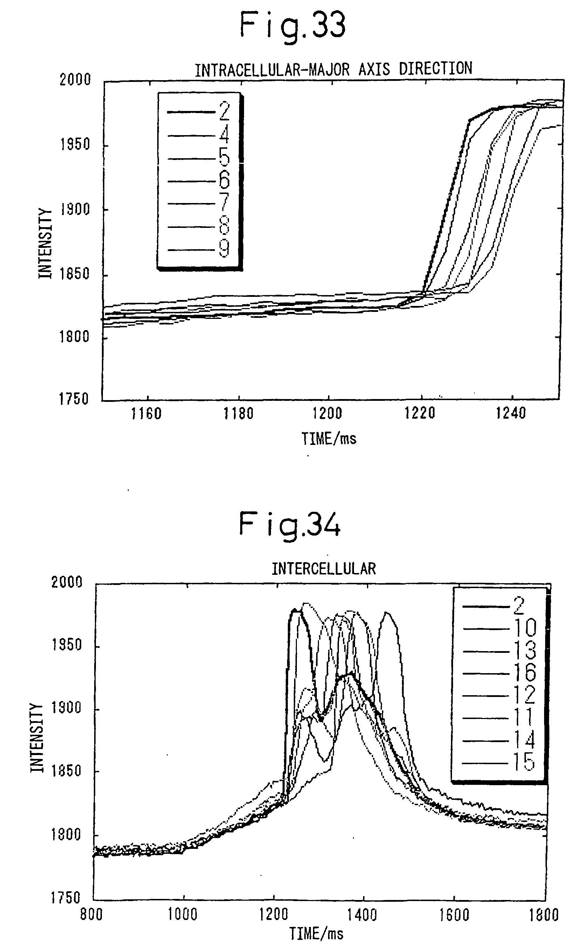

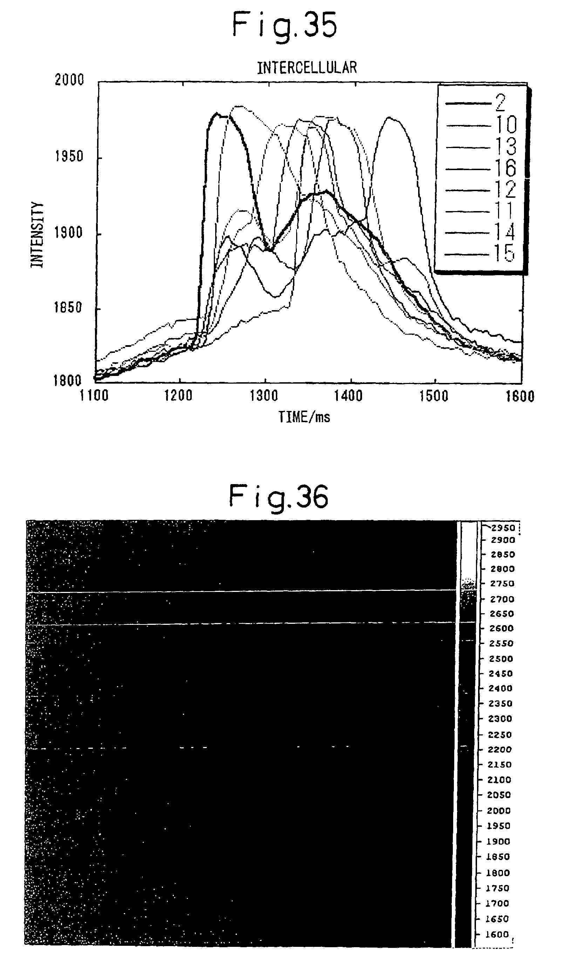

When comparing with the results of Figs. 34 and 35, the results closely agree with the times of the peaks at points (10) and (11) in Fig. 29, thereby indicating that this cell is affected by the latent heat of both adjacent cells that make contact with this cell at its major axis (temperature rise due to their transfer of heat).

Figs. 32 and 33 show a comparison of temperature a change in the direction of the major axis within the cells. It was observed that, as the distance from the starting point of the latent heat generation became larger in the direction toward both ends, the rise time for the latent heat caused a larger delay. The temperature propagation rate in the direction of the major axis within the cells was estimated to be about 10 μm/ms on the basis of this. The latent heat has two or three peaks, and has three peaks at locations close to the end in the direction of the major axis. When comparing with the results of Figs. 34 and 35, for example, the third peak of graph (16) in these figures closely agrees with the time of the peak of graph (12), and this indicates that this cell is affected by the latent heat from an adjacent cells in contact with the end of its major axis.

Figs. 34 and 35 show a comparison of the temperature profiles roughly at the centers of seven surrounding cells which are in contact with this cell. Although the temperatures at the center of each cell each have a plurality of peaks, the time that indicates the largest peak represents the time at which the cell itself freezes, and this time is not consistent between cells. The other peaks are the result of the effects of latent heat from surrounding cells. The size of the delay in the time that imparts the largest peak between adjacent cells each having two long sides in contact was nearly constant at about 20 ms. In this manner, this method makes it possible to measure and analyze information relating to heat movement within and between cells in individual cell units.

Example 3

(Temperature calibration method by using a black body)

Experimental Method: A Teflon sheet measuring 1 cm $\times$ 1 cm (thickness: 20 μm) was used for the measurement sample. A portion of the sample in the form of flat plate (size: 1 cm $\times$ 1 cm) was coated with a carbon spray (emissivity: 0.94, thickness: 1 μm) to prepare a pseudo black body. A calibrated chromel-alumel thermocouple having a diameter of 25 μm (trade name: SPAL-001-50, SPCH-001-50, Omega Engineering Inc.) was attached to the surface of this pseudo black body, and the temperature was loaded into a personal computer (trade name: Inspiron 3000, Dell) through a predetermined interface (trade name: AT-GPIB, National Instruments) from the thermocouple. The conditions for capturing of the temperature data at this time were as shown below.

<Temperature Data Capturing Conditions> 1000 points/sec

A ceramic heater measuring 1 cm × 1 cm (trade name: Sakaguchi E.H. VOC) was adhered to the bottom (lower side) of the sample by using silver paste and heated by applying current of 5.9 V and 0.11 A from a direct current power source to slowly change the temperature of the sample from room temperature (about 26°C) to about 150°C.

The vicinity of the interface between the pseudo black body surface, including the above-mentioned thermocouple, and the Teflon surface was measured with an infrared camera similar to that used in Example 1. The shutter speed of the infrared camera was set to 0.5 ms, the number of frames per second to 120, and the number of pixels to 256 × 256 pixels.

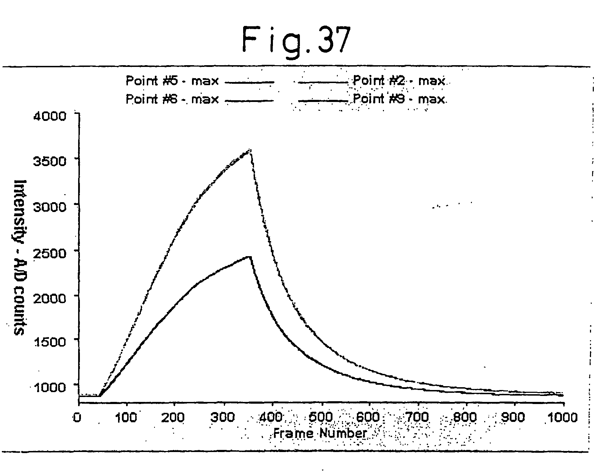

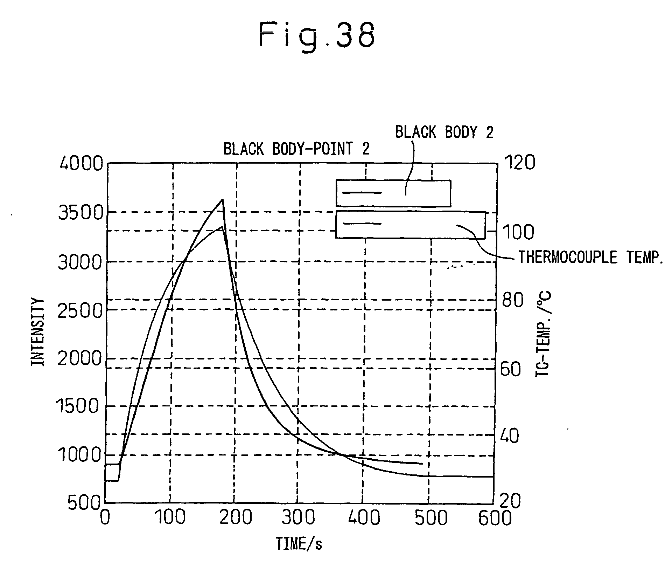

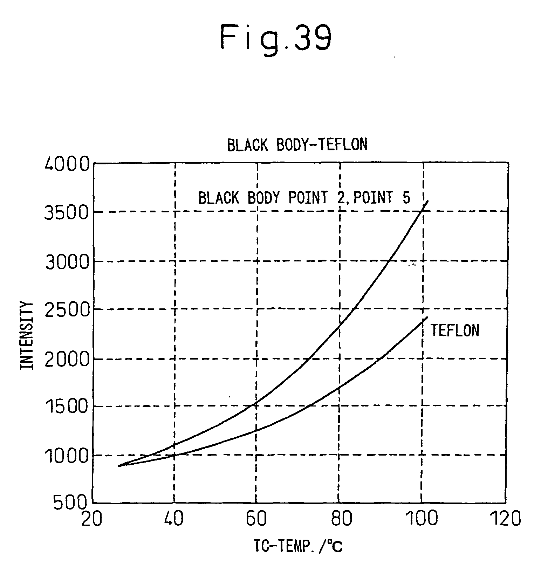

Results: An example of an image of the measured surface is shown in Fig. 36. In the figure, the left half indicates the pseudo black body surface, the lower left corner the thermocouple and the right half the Teflon surface. In this measurement, the temperature of each portion can be considered to be constant at about 1 degree per minute. Fig. 37 shows a time-based change in emissivity intensity at a location near the thermocouple within the pseudo black body surface (+2 in the figure) and at a location within the Teflon surface (+9). Emissivity intensity tended to be higher within the black body surface. Fig. 38 shows a time-based change in emissivity within the black body surface and temperature according to the thermocouple. There is no time-based delay observed in the rate of change for both times. Fig. 39 is a graph of the relationship between emissivity intensity and temperature for the pseudo black body surface and Teflon surface as determined from the above results. As a result of placing a pseudo black body within the field of the infrared camera in this manner, temperature can be calibrated even in the case of highspeed scanning by measuring simultaneously.

Example 4

(Analysis of cooling process of plant endothelial cells-Simultaneous observation of heat of solidification and thermal diffusivity between and within cells when cooled while imparting an alternating current modulated temperature)

Experimental Method: A Peltier element (trade name: MO-40) was provided on an aluminum heat sink, of which one side was cooled with ice water, by using silver paste, and a flat electrode (1 mm × 5 mm, thickness: 50 nm, resistance of flat electrode: 50 ohms) was attached to a Pyrex glass plate thereon by metal sputtering.

Onion endothelial cells described below were placed directly on the flat electrode formed in this manner and a temperature wave was generated by applying an alternating current having a frequency of 0.5 Hz (3 Vp-p, resistance of flat electrode: 48 ohms, waveform: sine wave) to the flat electrode. While generating a temperature wave in this manner, the entire sample system was cooled at a cooling rate of about 200°C/min over the range from room temperature to about -30°C by applying current to the above-mentioned Peltier element, and the temperature distribution in the alternating-current temperature field within the cell was measured by using an infrared camera similar to that used in Example 1. The shutter speed of the infrared camera was set to 2 ms, the number of frames to 400 frames/second, and the number of pixels to 128 × 128 pixels.

Sample: The first or second layer of the bud and the exodermis at a location nearly in the center from the location of the root were sampled from the outside of a fresh onion and spread out on a slide glass for use as the sample. The thickness was about 75 μm, and the size of a single cell was about 50 μm × 300 μm.

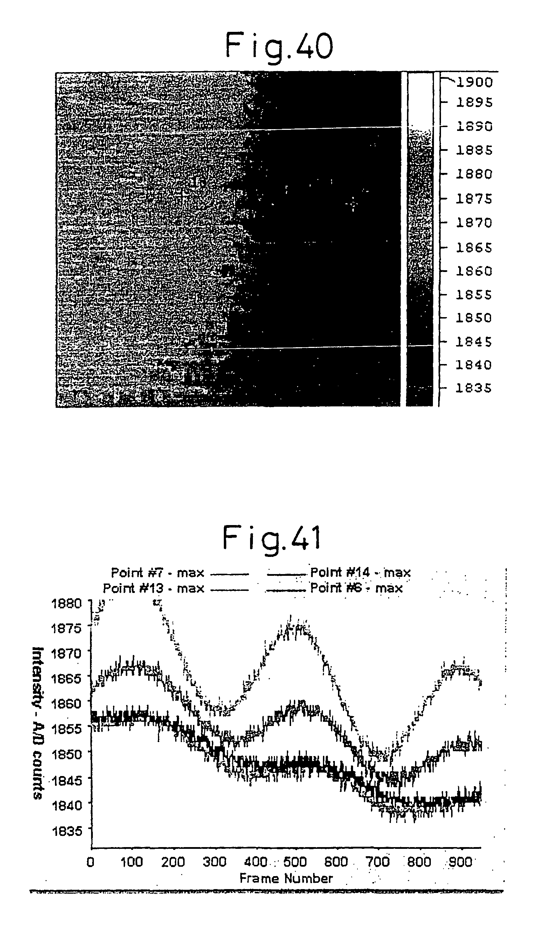

Results: Fig. 40 shows an example of the temperature distribution at a certain instant in time of an onion cooled while imparting an alternating-current temperature. In the figure, the onion and flat electrode are in contact at the lower surface of the high-temperature region (shown in green on the left). This image was captured at the time the cells solidified in the vicinity of this interface. Fig. 41 shows the temperature profiles of two points (+13 and +14) within the cell which are in contact with the flat electrode, and two points (+7 and +6) within the cell which are in contact with the cell described above but not in contact with the flat electrode. However, point (+14) is not in contact with the flat electrode. A phase delay occurs as the distance from the location of the contact with the flat electrode is increased, and the thermal diffusivity as calculated from the above-mentioned formula (8) was about 0.15 $mm^2s^{-1}$.

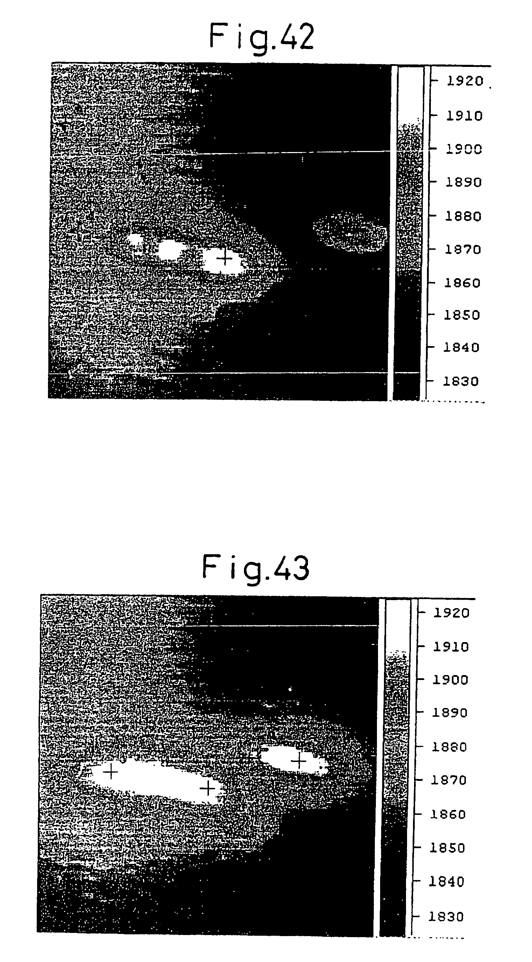

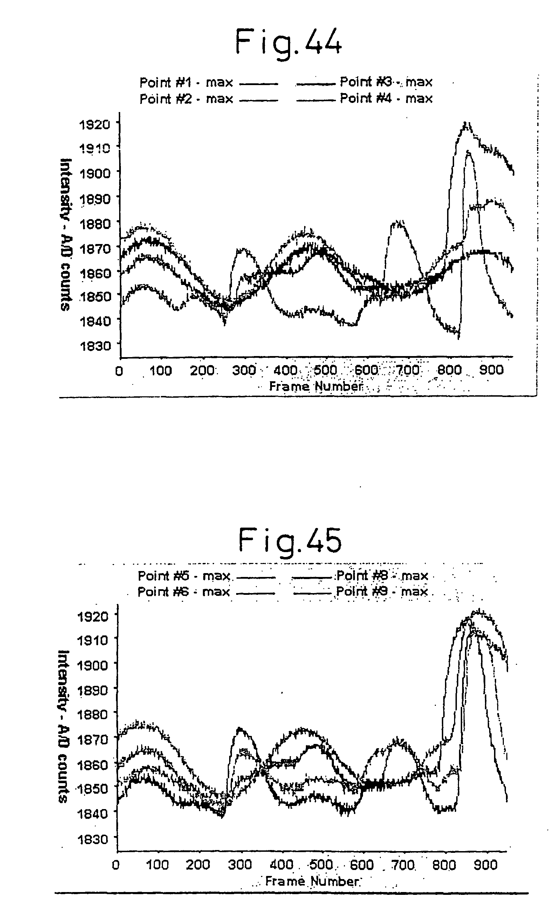

Figs. 42 and 43 depict the generation of heat due to the latent heat of onion cells subjected to application of alternating current. Even when an alternating-current temperature is applied, the cells exhibit generation of latent heat in individual cell units during the cooling process, and during the generation of this latent heat, the cells do not solidify in the order of the adjacent cells. Fig. 44 shows the temperature profiles of temperature a change at the points described in Fig. 42. The profiles can be seen to be affected by the alternating-current temperature field and their shape can be seen to be altered during generation of latent heat both in the case of contact with the flat electrode and in the case of the absence of such contact. Fig. 45 shows a change in alternating-current temperature at different locations in the direction of the major axis within the cells. The effects of latent heat can be seen to differ according to the location even within the same cell.

Example 5

(Measurement of anisotropy of temperature diffusion at the micro interface of a super-oriented polyethylene fibril)

Experimental Method: After attaching a flat electrode (1 mm × 5 mm, thickness: 50 nm, resistance of flat electrode: 50 ohms) and a lead section by metal sputtering in the direction of stretching and in the direction perpendicular to it to a super-oriented polyethylene film provided in the manner described below, and then crimping the above-mentioned polyethylene film on sapphire glass, a temperature wave was generated by applying an alternating current (alternating current voltage: 3-10 Vp-p, waveform: sine wave and mixed or superposed wave) having a frequency of 0.05 Hz to 300 Hz. The shutter speed of the micro infrared camera (trade name: Radiance HS, Raytheon) used to measure temperature distribution was set to 1 ms, the number of frames to 200 frames/second and the number of pixels to 128 × 128 pixels.

Sample: A super-oriented polyethylene film (magnification: 50 times) provided by the gel stretching method was used for the sample. The thickness was 20 μm and the size was 1 cm × 1 cm square (J. Mater. Sci., 1980, 15, 505 can be referred to regarding the details of the super-oriented polyethylene film provided by the gel stretching method).

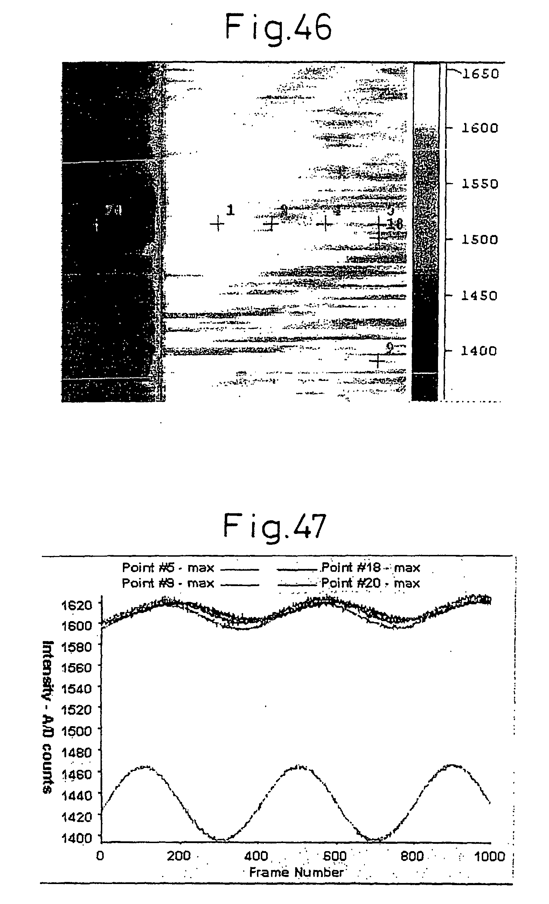

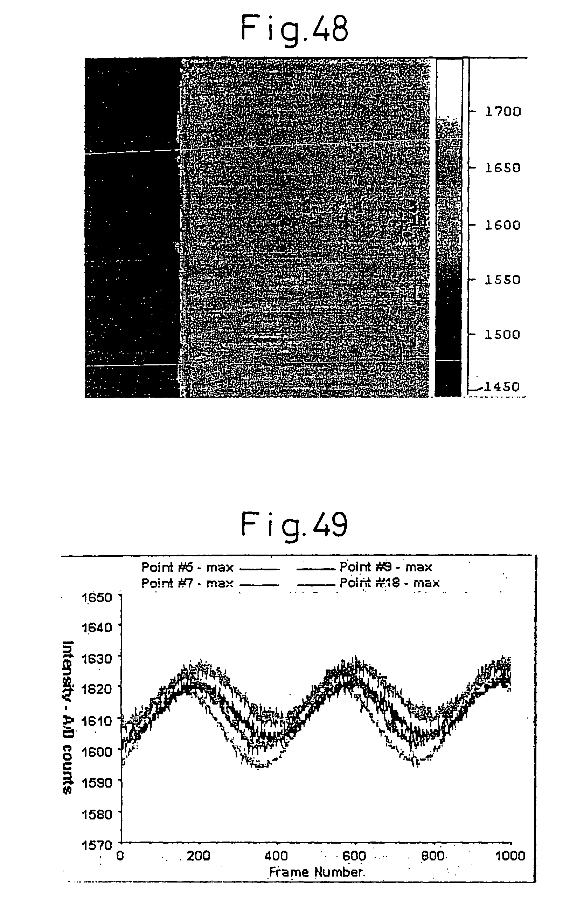

Results: Fig. 46 shows the temperature distribution of polyethylene fibrils observed with a micro infrared camera while imparting an alternating-current temperature at room temperature. In the figure, the portion that appears black indicates the sputtering electrode. The major axis of the plate electrode is perpendicular to the direction of orientation of the fibrils. Temperature propagates in the direction of the fibrils and the temperature can be seen not to be propagating at the micro interface between fibrils. The temperature profiles of three points at equal distances in the direction of the fibrils from the plate electrode (+5, +9 and +18 shown in Fig. 46) and one point on the electrode (+20) are shown in Fig. 47. Although an equal phase delay ought to be exhibited at equal distances from the alternating current heat source In a case where the sample is uniform, when based on the waveform on the electrode in Fig. 47, the phase delay differs even for the same distance, thus demonstrating anisotropy in the thermal diffusivity. In Fig. 49, an additional point at an equal distance (+7) is added, and an enlarged view is shown of the distribution of phase delay at an equal distance from the heat generating surface. Fig. 48 was captured at a different instant in time by using the same sample and under the same conditions as Fig. 46. The temperature distribution between fibrils is clearly observed. These results indicate that quantitative observations can be made of the orientation within a material or the non-uniformity of heat propagation at a micro interface by observing the temperature distribution in an alternating current field by using a micro infrared camera.

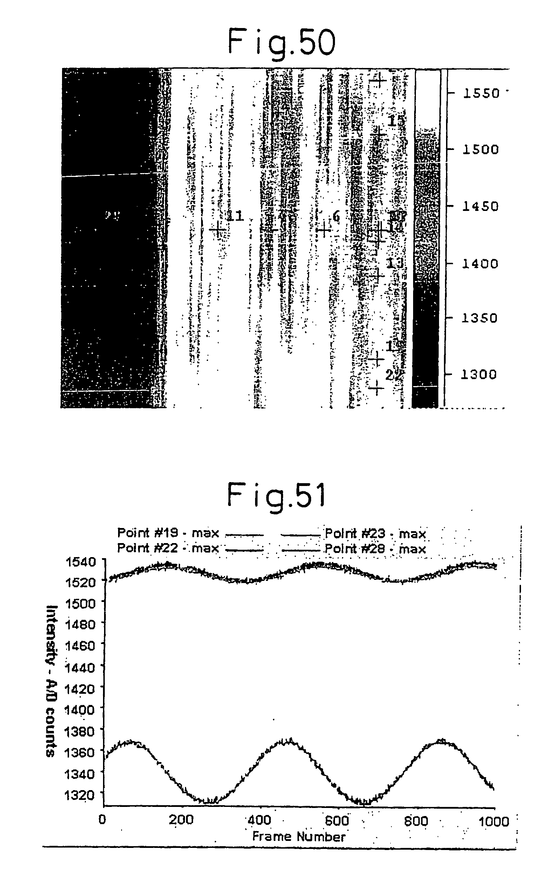

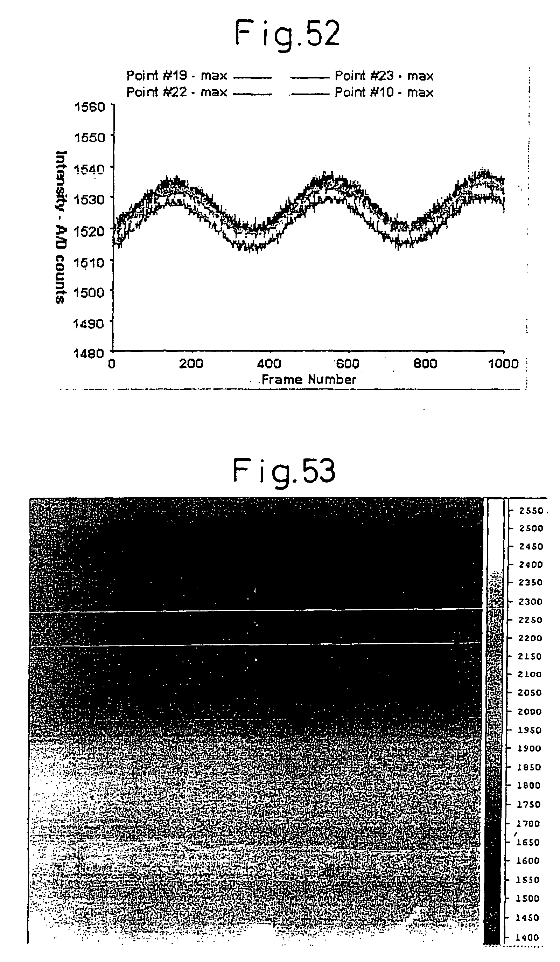

On the other hand, the results of measuring the temperature distribution of the fibrils in an alternating-current temperature field In a case where the orientation direction of the fibrils and the direction of the major axis of a parallel electrode are in parallel are shown in Fig. 50. It can be seen that, although the advancing wave front of the alternating-current temperature field is parallel to the major axis of the electrode, the temperature of a single fibril in parallel with this wave front is nearly uniform, and that non-uniformity occurs in the temperature field at the micro interface between adjacent fibrils. Fig. 51 shows the temperature profiles of locations at an equal distance from the parallel electrode, namely locations within a single fibril (+19, +22 and +23) and one point on the electrode (+28). In this case, an equal phase delay is demonstrated within a single fibril. En enlarged view of Fig. 51 is shown in Fig. 52. There is no difference observed in the phase delay within the fibril.

Based on the results of Figs. 49 and 52, when the coefficients of thermal diffusion in the direction of the fibrils and the direction perpendicular to it were determined, it was found to be 3.4 mm2s-1 in the direction of the fibrils and 0.67 mm2s-1 in the perpendicular direction, thus making it possible to evaluate non-uniformity of heat transfer at the micro interface.

Example 6

(Measurement of thermal diffusivity in the direction of a film flat surface)

Sample and Experimental Method: After attaching a flat electrode (1 mm × 5 mm, resistance of flat electrode: 50 ohms) and a lead section to a polyimide (thickness: 3.7 μm) surface provided on glass (trade name: Pyrex 7740, Corning) by direct metal sputtering, and fastening the film on sapphire glass (trade name: 43629, Edmund) with Aron Alpha 201, a temperature wave was generated by applying an alternating current (alternating current voltage: 3-5 Vp-p) having a frequency of 0.1 Hz to 10 Hz. The shutter speed of the infrared camera used to measure temperature distribution (trade name: Radiance HS, Raytheon) was set to 0.5 ms, the number of frames to 1500 frames/second and the number of pixels to 64 × 64 pixels.

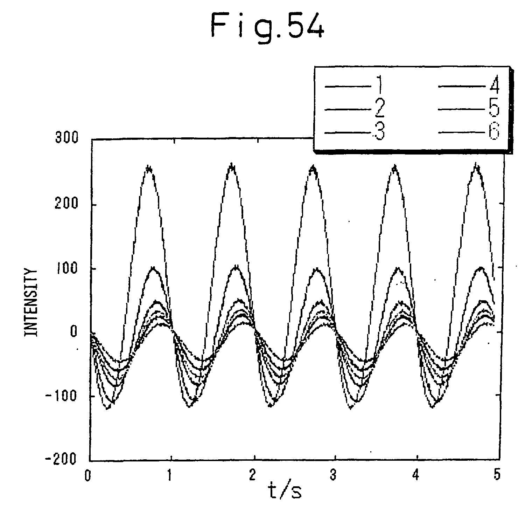

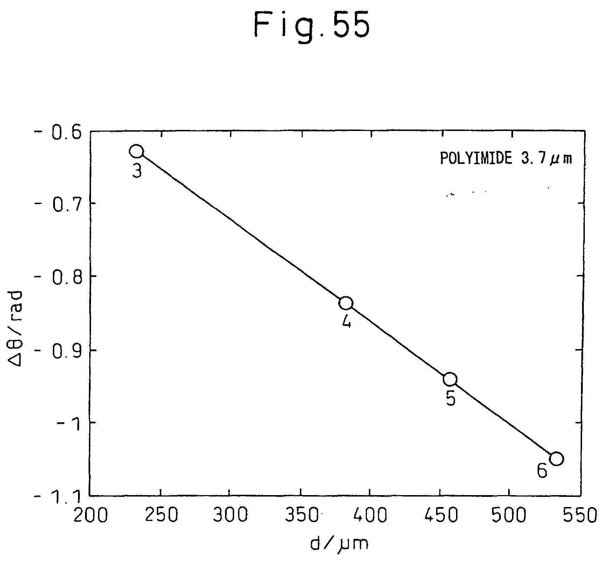

Results: Fig. 53 shows the two-dimensional temperature distribution in the flat electrode and film surface. In the figure, the lower portion indicates the source of the alternating-current temperature wave generated by the flat electrode. The wave front with respect to the direction of advance of the temperature wave is observed to be parallel to the direction of the major axis of the parallel electrode. An example of measuring a time-based change in alternating-current temperature at locations at different distances from the parallel electrode (+1 through +6 in Fig. 53) is shown in Fig. 54. The phase can be seen to become increasingly delayed the greater the distance from the parallel electrode. An example that demonstrate the linear relationship is shown in Fig. 55 when phase delay $\Delta\theta$ is plotted versus distance d from the location of the electrode. Since the slope of this plot represents the relationship between the thermal diffusivity and frequency, the thermal diffusivity can be calculated if the frequency is known. The thermal diffusivity in the case of Fig. 55 was calculated to be 0.28 mm$^2$s$^{-1}$.

Example 7

(Observation of latent heat of cooling and crystallization processes of water droplet in air)

Experimental Method: A Peltier element (trade name: MO-40) was provided on a cooling plate over dry ice by using silver paste, and the latent heat of solidification of water droplet was observed that adhered, cooled and crystallized during the course of cooling at a cooling rate of about 200°C/min over a range from room temperature to about -30°C. The shutter speed of the infrared camera (trade name: Radiance HS, Raytheon) was set to 1 ms, the number of frames to 400 frames/second and the number of pixels to 128 × 128 pixels.

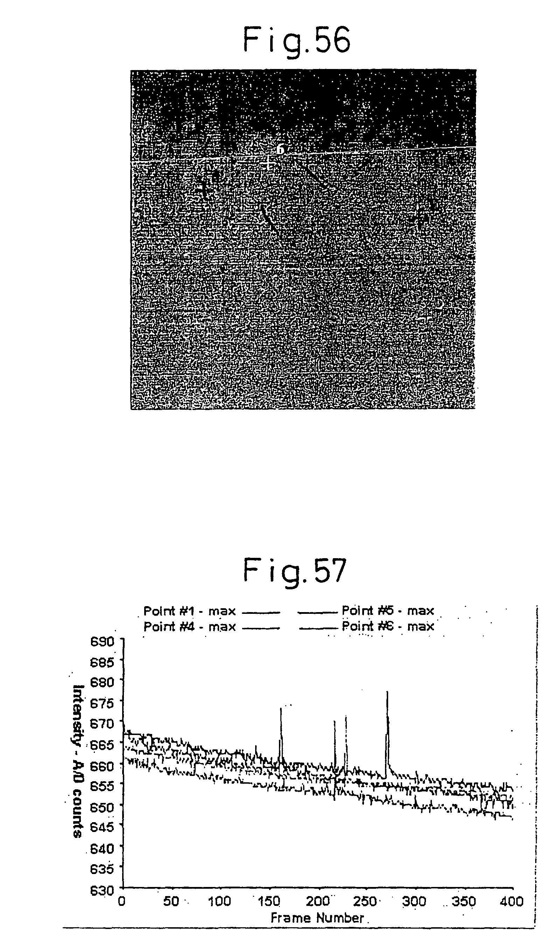

Results: Fig. 56 shows an image captured at a certain instant in time during the generation of latent heat by the water droplet, while Fig. 57 shows a profile of the temperature a change in the case of latent heat having been generated at the locations shown in Fig. 56.

Example 8

(Observation of micro steady-state heat flow and measurement of coefficient of thermal conductivity)

Sample and Experimental Method: In a case where that a sample s is positioned between reference samples r1 and r2, and one-dimensional, steady-state heat flow (in a vacuum, constant cross-sectional area) can be assumed, and if the effect of heat loss on the surroundings is negligible, then the coefficient of thermal conductivity $\lambda$s of the sample can be determined according to the formula (12) shown below from the ratio with the temperature gradient in the reference samples.

$$\lambda_s = \lambda_{r1} \left.\frac{\partial T}{\partial x}\right|_{r1} \bigg/ \left.\frac{\partial T}{\partial x}\right|_s = \lambda_{r2} \left.\frac{\partial T}{\partial x}\right|_{r2} \bigg/ \left.\frac{\partial T}{\partial x}\right|_s \qquad (12)$$

In the above formula, $\lambda$r1 and $\lambda$r2 are the coefficients of thermal conductivity of the reference samples.

A ceramic plate having a thickness of 0.6 mm (trade name: Macor, Ishihara Chemical, ceramic type: $SiO_2 \cdot Al_2O_3$ blend) was selected for the reference samples, and these ceramic plates were shaped into a sandwich form so as to sandwich the sintered bismuth-tellurium-selenium thermocouple material (thickness: 0.7 mm, molar ratio of bismuth to tellurium to selenium: 40:59.5:0.5).

A carbon resistor and a copper plate for uniform heating were attached to one side of the sandwich-like molded product obtained in the manner described above (one side of the bismuth-tellurium-selenium sintered body that is not in contact with the ceramic plate). The carbon resistor used at this time measured 1.5 × 1.5 cm, had a thickness of 0.1 mm and had a resistance value of 100 ohms. In addition, the copper plate measured 1 mm × 1 mm and had a thickness of 0.5 mm. The copper plate was affixed to the above-mentioned side of the sandwich-like molded product by using heat-resistant silicon (Sanhayato), and the carbon resistor was affixed to the surface of the copper plate by using heat-resistant silicone.

An aluminum heat sink (size: 1 mm × 1 mm, thickness: 2 mm) was adhered to the other side of the sandwich-like molded product by using heat-resistant silicone (Sanhayato).

In the above-mentioned system, current (3 V, 0.1 A) was applied to the carbon resistor to raise the temperature of the copper plate by about 10°C followed by waiting for the temperature to stabilize (about 5 minutes from the start of current application). The temperature at this time was measured with a temperature sensor (Thermotex, trade name: Chromel-Alumel Thermocouple) attached to the copper plate by using heat-resistant silicone (Sanhayato).

In the above-mentioned system, the cross-sectional areas of the macor, sample and macor constant (roughly $0.7 \times 0.7$ mm) were made constant, and heat loss due to convection to the periphery as well as heat loss due to radiation were reduced, so that heat flow per unit surface area could be determined.

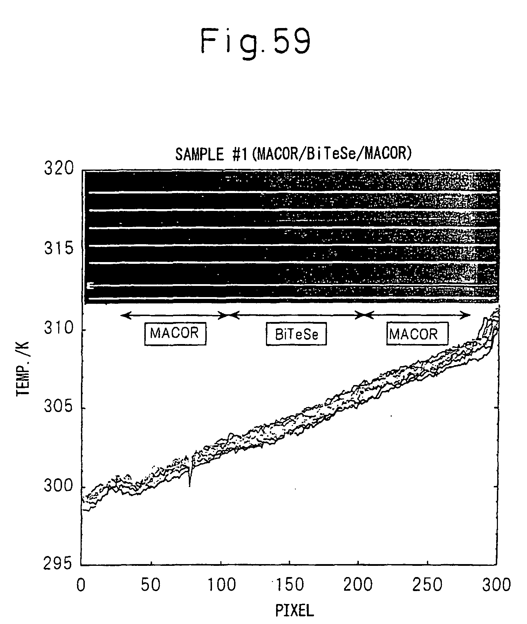

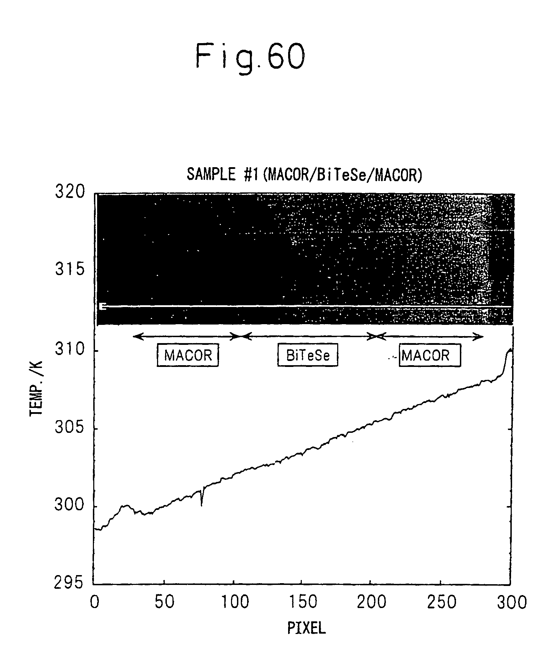

In the above-mentioned measurement, the results of observing infrared temperature obtained in the steady state are shown in Figs. 59 and 60. In Figs. 59 and 60, the right side indicates the generation of heat while the left side indicates the low-temperature heat sink. The horizontal lines in the figures indicate the lines where temperature gradient was measured. The measurement results of Fig. 59 were obtained from the results of several analyses, while the measurement results of Fig. 60 indicate the average value. The coefficient of thermal conductivity as determined from the temperature gradient of Fig. 60 was 1.25-1.88 W/mK, which closely agrees with the known value of 1.60 previously determined by ordinary method.

In addition, in Figs. 59 and 60, a temperature decrease was clearly observed at the contact interface between the heater and sample. This result clearly demonstrated the measurement method according to the present invention is also suited to the measurement of interfacial thermal resistance.

Example 9

(Three-dimensional display and differential images)

Sample and Experimental Method: Same as Example 4.

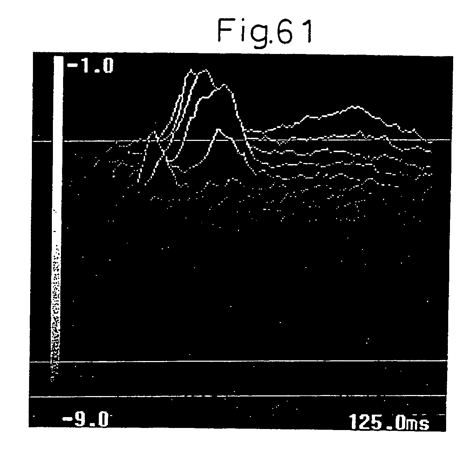

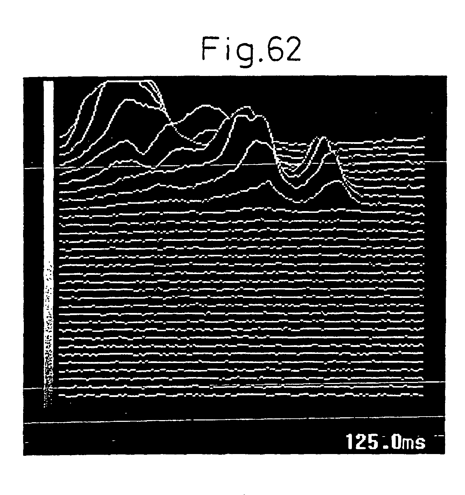

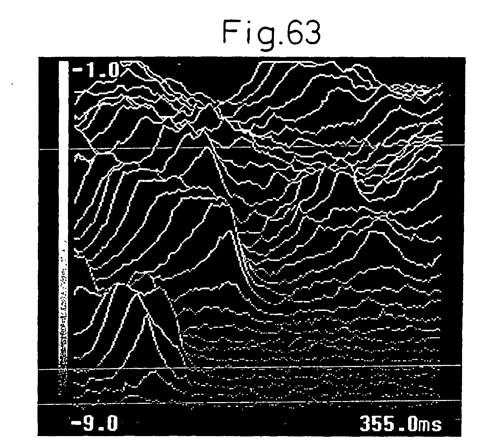

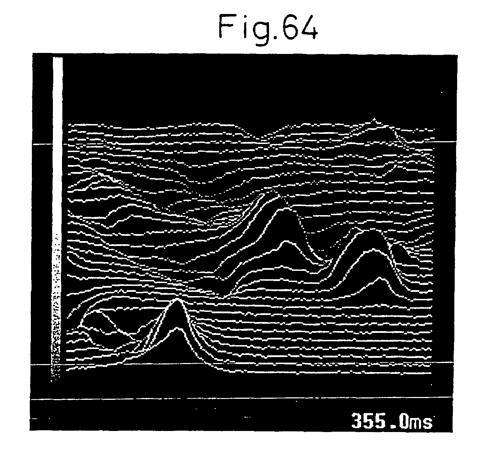

Results: The temperatures of an onion during the cooling and solidification process were captured by highspeed imaging in the form of surface data that was then stored in memory. The temperature display at a certain point in time during the solidification process was displayed three-dimensionally in the xy plane plotting temperature on the z axis (Figs. 61 and 63) while at the same time, the images of one to several frames earlier were subtracted and the temperature display was re-plotted three-dimensionally in the form of differential images (Figs. 62 and 64). Here, the states at 125 milliseconds from the start of imaging (Figs. 61 and 63) and at 355 milliseconds from the start of imaging (Figs. 62 and 64) are shown.

As is clear from a comparison of both representations of temperature (Figs. 61 and 63) and differential temperature (Figs. 62 and 64), differential images were determined to have less noise and the generation of heat due to solidification was depicted more clearly. Further, the images at each time were able to be depicted continuously thereby making it possible to depict the solidification process in the form of three-dimensional animated images.

Industrial Applicability

As described hereinabove, the following effects can be obtained according to the present invention.

(1) Rapid measurement of temperature a change is easy due to observing minute portions.
(2) Rapid infrared (thermal) analysis easy due to observing minute portions.
(3) Two-dimensional (and/or pseudo three-dimensional) infrared (thermal) analysis can be carried out easily as desired.
(4) Thermal diffusivity can be measured simultaneously by observing the diffusion of a temperature wave from an alternating current heat source as desired.

The analysis method and analysis apparatus according to the present invention can be used without any particular restrictions for applications in which analysis of the thermal characteristic of minute portions with an infrared sensor is useful. Examples of such applications are indicated below.

(1) Analyses based on detailed actual measurement of the freezing process of biological substance (which were performed by simulations in the past).
(2) Analyses based on detailed actual measurement of the freeze-drying process of frozen foods.
(3) Absorption and generation of heat resulting from applying current to a Peltier element can be observed on the micron order.
(4) Heat transfer and melting phenomena can be elucidated in complex systems such as composite materials and foam materials.
(5) Temperature a change based on chemical reactions in microscopic portions can be followed.
(6) Processes by which heat diffuses to the periphery in the case of chemical reactions, latent heat and so forth.
(7) Observation of absorption and generation of heat accompanying deformation or destruction of materials under stress.

(8) Thermal observation of the evaporation process of water from the surface of a substance.

**Claims**

1. A thermal analysis method, comprising: imparting a temperature change to at least a portion of a sample to be measured, so as to measure the thermal characteristic of a minute portion of the sample based on the temperature change, by using an infrared sensor.

2. A thermal analysis method according to claim 1, wherein the thermal characteristics are simultaneously measured with respect to each of a plurality of minute portions.

3. A thermal analysis method according to claim 1 or 2, wherein the measurement is carried out by using an infrared radiation thermometer or an infrared CCD camera.

4. A thermal analysis method according to any of claims 1 to 3, wherein the temperature change is a temperature rise or a temperature fall of a sample at a constant rate.

5. A thermal analysis method according to any of claims 1 to 4, wherein the minute portion of the sample is measured while enlarging the minute portion with an infrared image enlarging means.

6. A thermal analysis method according to claim 5, wherein the infrared image enlarging means is a microscope lens or a reflecting mirror.

7. A thermal analysis method according to any of claims 1 to 6, wherein the thermal characteristic of the minute portion of the sample is compared with that of a minute portion of a reference sample which can be regarded as a quasi-black body to which a rising or falling temperature change has been applied in the same manner as in the sample to be measured.

8. A thermal analysis method according to any of claims 1 to 7, wherein a partial heater (heat source) using light radiation including laser light or using the generation of Joule heat due to the application of an electric current is provided on a portion of the sample.

9. A thermal analysis method according to any of claims 1 to 8, wherein the partial heater is an alternating current heat source, and an alternating current-like temperature change is applied to at least a portion of the sample by the partial heater so as to observe a diffusion thereof.

10. A thermal analysis method according to any of claims 1 to 9, wherein the thermal characteristic is at least one characteristic selected from the group consisting of: temperature, temperature change, temperature distribution, latent heat, melting or solidification state, thermal diffusivity obtained from a phase delay of temperature wave, thermal conductivity obtained from a decay of temperature wave; and a time evolution of these thermal characteristics, or a difference or ratio of these thermal characteristics among a plurality of minute portions.

11. A thermal analysis method according to claim 9, wherein a local alternating-current temperature is applied to the partial heater, and the thermal diffusivity is determined from the temperature change of the minute portion which has been measured by using an infrared sensor or contact sensor provided at a location with a distance d from the heater.

12. A thermal analysis method according to claim 11, wherein the frequency characteristic of a sample is determined by changing the frequency of a temperature wave due to the local alternating-current temperature.

13. A thermal analysis apparatus comprising at least:

temperature changing means for applying a temperature change to a sample to be measured,
infrared image enlarging means for enlarging a minute portion of the sample, and
infrared measuring means for measuring the thermal characteristic of the minute portion;
whereby the thermal characteristic of the minute portion of the sample is measured by using infrared ray based on a temperature change, while applying the temperature change to at least a portion of the sample.

14. A thermal analysis apparatus according to claim 13,wherein the temperature changing means comprises means for raising or lowering the temperature of the entire sample to be measured at a constant rate, and means for imparting a temperature change to the sample by alternating current.

15. A thermal analysis apparatus according to claim 13 or 14,wherein the thermal characteristic of the minute portion of the sample is measured based on the temperature change by using an infrared sensor and a minute contact-type temperature sensor.

16. A thermal analysis apparatus according to any of claims 13 to 15,wherein the minute contact-type temperature sensor is selected from a thermocouple, a thermistor or a metal resistance thermometer.

17. A thermal analysis apparatus according to claim 15,wherein the minute contact-type temperature sensor is one which can be provided to at least one point on the upper and lower flat surface of a plate-like sample, and can measure the temperature diffusion from the heat source.

18. A thermal analysis apparatus according to any of claims 13 to 17,which further comprises a temperature controller for controling the temperature to be applied to the entire sample from the temperature changing means.

19. A thermal analysis apparatus according to any of claims 13 to 16,which further comprises data processing means for processing the data conversion of the measured temperature change into one or more types of data selected from: latent heat, thermal diffusivity, coefficient of thermal conductivity, thermal resistance, thermal conductance and heat transfer rate.

# Fig.1

# Fig.2

$$T = T_0 \cdot \cos(\omega t)$$

$x = 0$  $x = d$

# Fig.3

(a)

(b)

# Fig.4

(a)

THERMALLY THICK

(b)

THERMALLY THIN

# Fig.5

D-C POWER
SUPPLY

DUMMY RESISTANCE

TEMP. SENSOR

LOCK-IN AMPLIFIER

# Fig.6

CAMERA

VACUUM PUMP

PERSONAL
COMPUTER

COOLING
SYSTEM

HEAT
CONTROLLER

SAMPLE

FUNCTION
SYNTHESIZER

LOCK-IN
AMPLIFIER

PERSONAL COMPUTER

# Fig. 7

VOLTAGE OF ALTERNATING
CURRENT HEAT SOURCE

MEASUREMENT SIGNAL

TIME

TIME

FFT

FREQUENCY

FFT

FREQUENCY

# Fig. 8

(a)

(b)

PHASE LAG/deg

$\sqrt{f}/Hz^{1/2}$

AMPLITUDE $\mu V$

$\sqrt{f}/Hz^{1/2}$

# Fig.9

INFRARED RADIATION
THERMOMETER

DATA PROCESSOR

MICROSCOPE

SAMPLE

TEMP. CONTROLLER

HOT STAGE

# Fig.10

## (a)

50μm

100μm

## (b)

ALTERNATING CURRENT
HEAT SOURCE

10μm

# Fig.11

# Fig.12

## (a)

SAMPLE: 2mm × 1mm

1mm

2mm

ENLARGED BY
MICROSCOPE

## (b)

MEASUREMENT
RANGE: □100μm

100μm

100μm

PARTIALLY ENLARGED
PORTION IS MEASURED
IN 2500 PIXELS

( MEASUREMENT SIZE CORR.
TO ONE POINT 2μm × 2μm )

## Fig.13

## Fig.14

# F i g.15

# F i g.16

## Fig.17

## Fig.18

## F i g.19

## F i g.20

## Fig.21

## Fig.22

## Fig.23

## Fig.24

## Fig.25

## Fig.26

EP 1 450 155 A1

Fig.27

Fig.28

34

# Fig.29

# Fig.30

INTRACELLULAR-MINOR AXIS DIRECTION

# Fig.31

INTRACELLULAR-MINOR AXIS DIRECTION

# Fig.32

INTRACELLULAR-MAJOR AXIS DIRECTION

# Fig.33

INTRACELLULAR-MAJOR AXIS DIRECTION

# Fig.34

INTERCELLULAR

# Fig.35

# Fig.36

# Fig.37

# Fig.38

# Fig.39

BLACK BODY-TEFLON

# Fig.40

# Fig.41

## Fig.42

## Fig.43

## Fig.44

## Fig.45

# Fig.46

# Fig.47

# Fig.48

# Fig.49

# Fig.50

# Fig.51

# Fig.52

Point #19 - max ———    ——— Point #23 - max
Point #22 - max ———    ——— Point #10 - max

# Fig.53

# Fig.54

# Fig.55

POLYIMIDE 3.7 μm

# Fig.56

# Fig.57

## Fig.58

# Fig.59

SAMPLE #1 (MACOR/BiTeSe/MACOR)

# Fig.60

SAMPLE #1 (MACOR/BiTeSe/MACOR)

## Fig.61

## Fig.62

125.0ms

## Fig.63

## Fig.64

355.0ms

EP 1 450 155 A1

## INTERNATIONAL SEARCH REPORT

International application No.

PCT/JP02/12076

**A. CLASSIFICATION OF SUBJECT MATTER**
Int.Cl⁷ G01N25/18

According to International Patent Classification (IPC) or to both national classification and IPC

**B. FIELDS SEARCHED**

Minimum documentation searched (classification system followed by classification symbols)
Int.Cl⁷ G01N25/18

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)
JOIS: [SEKIGAISEN*KENBIKYO*[NETSU+ONDO]] (in Japanese)

**C. DOCUMENTS CONSIDERED TO BE RELEVANT**

| Category* | Citation of document, with indication, where appropriate, of the relevant passages | Relevant to claim No. |
|---|---|---|
| X | Masanobu KOBAYASHI, Akira ONO, Japanese journal of optics, 17(10), pages 522 to 523 (1988) Page 522, right column, lines 1 to 16; page 523, right column, lines 2 to 9 | 1,6,8,13,18, 19 |
| X | Junko MORIKAWA, Toshimasa HASHIMOTO, "Netsu Sokutei Toron Koen Yoshishu", 37th, pages 22 to 23, published on 05 November, 2001 (05.11.01) Full text | 1-6,8,13,14, 18,19 |
| Y | Full text | 7,9,10-12, 15-17 |
| Y | JP 01-013446 A (Shinku-Riko, Inc.), 18 January, 1989 (18.01.89), Claims; Fig. 1 (Family: none) | 7 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 December, 2002 (24.12.02) | 14 January, 2003 (14.01.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
| --- |
| PCT/JP02/12076 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 07-103921 A   (Shinku-Riko, Inc.),<br>21 April, 1995 (21.04.95),<br>Claims; Fig. 2<br>(Family: none) | 7 |
| Y | Junko MORIKAWA, Toshimasa HASHIMOTO, Membrane,<br>25(6), pages 316 to 317 (2000)<br>Full text | 9-12 |
| Y | JP 2000-121585 A   (Director General, Agency of<br>Industrial Science and Technology),<br>28 April, 2000 (28.04.00),<br>Abstract<br>(Family: none) | 9-12 |
| Y | JP 10-221279 A   (Shinku-Riko, Inc.),<br>21 August, 1998 (21.08.98),<br>Abstract<br>(Family: none) | 12 |
| Y | JP 10-318953 A   (Sharp Corp.),<br>04 December, 1998 (04.12.98),<br>Abstract; Par. No. [0005]<br>(Family: none) | 12 |
| Y | JP 11-218509 A   (Ichiro TAKAHASHI),<br>10 August, 1999 (10.08.99),<br>Abstract<br>(Family: none) | 15-17 |

Form PCT/ISA/210 (continuation of second sheet) (July 1998)